# EUROPÄISCHE PATENTSCHRIFT

(11) **EP 3 574 029 B1**
(45) Veröffentlichungstag und Bekanntmachung des Hinweises auf die Patenterteilung: **20.01.2021**
(21) Anmeldenummer: 18701353.7
(22) Anmeldetag: 26.01.2018
(51) Int. Cl.: C08G 18/42

(54) **HARNSTOFFGRUPPEN- UND/ODER URETHANGRUPPEN-HALTIGE AMIDE ALS UND IN RHEOLOGIESTEUERUNGSMITTELN, DEREN HERSTELLUNG UND VERWENDUNG**
UREA-GROUP- AND/OR URETHANE-GROUP-CONTAINING AMIDES AS AND IN RHEOLOGY CONTROL AGENTS, THEIR PREPARATION AND THEIR USE
AMIDES CONTENANT DES GROUPES URÉE ET/OU URÉTHANE COMME ET DANS DES AGENTS DE RÉGULATION RHÉOLOGIQUE, LEURS PRÉPARATION ET UTILISATION

(30) Priorität: 30.01.2017 EP 17153779
(43) Veröffentlichungstag der Anmeldung: 04.12.2019
(73) Patentinhaber: BYK-Chemie GmbH, 46483 Wesel (DE)
(72) Erfinder: NAGELSDIEK, René, 46483 Wesel (DE); BÜHNE, Sylvia, 46483 Wesel (DE); GAUL, Silke, 46483 Wesel (DE); JACOBS, Berthold, 46483 Wesel (DE); KARWATH, Verena, 46483 Wesel (DE); LEUTFELD, Daniela, 46483 Wesel (DE); BERNERT, Dominika, 46483 Wesel (DE)
(74) Vertreter: Altana IP Department
(86) Internationale Anmeldenummer: PCT/EP2018/051908
(87) Internationale Veröffentlichungsnummer: WO 2018/138236

(56) Entgegenhaltungen:
- DE-A1-102006 010 721
- DE-B- 1 100 849

## Beschreibung

Wässrige Formulierungen spielen in verschiedensten Anwendungen eine bedeutende Rolle. Hierbei kommt den rheologischen Eigenschaften dieser wässrigen Formulierungen eine entscheidende Rolle zu. Diese rheologischen Eigenschaften werden in der Regel mit Hilfe von Rheologiesteuerungsmittel, hierin auch als Rheologieadditive bezeichnet, kontrolliert.

Rheologiesteuerungsmittel eignen sich grundsätzlich zur Viskositätserhöhung verschiedener Zubereitungen und zur Optimierung des Fließverhaltens der Zubereitungen für die jeweilige Anwendung. Angestrebt werden auch die Verbesserung der Lagerstabilität und der Verarbeitbarkeit solcher Zubereitungen wie beispielsweise Beschichtungsmitteln sowie die Erzielung höherer Schichtdicken, wenn derartige Beschichtungsmittel auf Substrate aufgebracht werden.

Beispielsweise im Bereich der Farben und Lacke besteht ein deutlicher Trend zu wasserbasierten Beschichtungen, da diese umweltfreundlicher und gesundheitlich weniger bedenklich sind als lösemittelhaltige Systeme. Gegenüber lösemittelhaltigen Systemen zeichnen sich wässrige Systeme allerdings in der Regel durch deutlich langsamere Trocknungsgeschwindigkeiten aus, was für die finalen Lackeigenschaften Konsequenzen hat. Ein Absetzen von in der Formulierung enthaltenen Feststoffen (z.B. Pigmenten oder Füllstoffen) muss verhindert werden, ein Ablaufen von applizierten Beschichtungen ist ebenso unerwünscht. Hierbei kommt geeigneten Rheologiesteuerungsmitteln eine bedeutende Rolle zu.

Beim Vorhandensein von sogenannten Effektpigmenten in Lackformulierungen, insbesondere wässrigen Lackformulierungen, spielt die Orientierung dieser Pigmente eine Rolle, welche sich in Eigenschaften wie Glanz, Brillanz und Flop-Verhalten (d.h. Änderung der koloristischen Eigenschaften eines Materials in Abhängigkeit vom Betrachtungswinkel) auswirken kann. Derartige Effektpigmente sind beispielsweise Metalleffektpigmente, wie zum Beispiel Aluminumpigmente, Messingpigmente, Goldbronzen, feuergefärbte Bronzen oder Eisenoxid-Aluminium-Pigmente. Ebenfalls zu den Effektpigmenten zählen beispielsweise Interferenzpigmente bzw. Perlglanzpigmente wie beispielsweise Metalloxid-Glimmerpigmente, Fischsilber, Bismutoxidchlorid oder basisches Bleicarbonat.

Vor allem in wässrigen Lacksystemen bestehen gegenüber lösemittelhaltigen Systemen deutliche Unterschiede, da aufgrund der langsameren Verdunstung des Wassers keine schnelle horizontale Fixierung der Effektpigmente erfolgt. Dennoch ist dieser Effekt auch von nicht-wässrigen Formulierungen bekannt. Eine horizontale Ausrichtung der Pigmente zum Untergrund ist aber - neben einer ausreichenden Deflockulierung - Voraussetzung für einen guten Flop-, Interferenz- bzw. Metallic-Effekt. Hierfür müssen Rheologiesteuerungsmittel eingesetzt werden. Im allgemeinen wird davon ausgegangen, dass diese im Idealfall durch Einstellung einer geeigneten Mindestviskosität sowie eines pseudoplastischen Fließverhaltens und auch von entsprechenden elastischen Anteilen ihre Wirkung entfalten; hierbei kommen neben der eigentlichen Orientierung der Pigmente auch einer gleichmäßigen Schichtdicke und der Verteilung der Pigmente in der Matrix eine entscheidende Bedeutung zu.

Zur Verdickung von flüssigen Formulierungen, insbesondere wässrigen Formulierungen werden Additive unterschiedlicher Natur eingesetzt. So werden als rheologische Hilfsstoffe beispielsweise Tonmineralien, Kieselsäuren, spezielle Polyamide oder Polysaccharid-basierte Verdicker eingesetzt. Nachteilig am Einsatz dieser rheologischen Hilfsstoffe ist, dass diese meist in Form von trockenen Feststoffen vorliegen. Folglich werden deshalb besagte rheologische Hilfsstoffe vor dem Einsatz unter Verwendung von Scherkräften zunächst zu einem Halbfabrikat aufgeschlossen. Dies ist jedoch oft unerwünscht, da mit zusätzlichem Aufwand verbunden. Außerdem ist der Umgang mit trockenen, pulverförmigen Produkten, die Stäube bei der Verarbeitung verursachen können, unerwünscht.

In US 2012/125235 werden Kombinationen von speziellen Polyamiden mit Amidwachsen und/oder hydriertem Ricinusöl beschrieben. Entsprechende Kombinationen sind aufgrund ihrer Konsistenz einerseits meist schwierig in ihrer Handhabbarkeit und Einarbeitbarkeit (vor allem in wässrige Medien), andererseits ist bekannt, dass zum Beispiel Rheologieadditive auf Basis von hydriertem Ricinusöl ein hohes Maß an Temperaturunverträglichkeit aufweisen, das heißt bei Überschreitung bestimmter Temperaturen unwirksam werden beziehungsweise zu Störungen im Lackfilm führen.

EP 0 877 063 beschreibt den Einsatz spezieller neutralisierter Polyamide, welche als wässrige Dispersion vorliegend als Antiabsetzmittel eingesetzt werden. Auch bei diesen Produkten reichen die anwendungstechnischen Eigenschaften, beispielsweise hinsichtlich Einarbeitbarkeit oder Qualität der erzielten Pigmentorientierung - oftmals nicht aus. Oft können entsprechende Additive beispielsweise nur als niedrigprozentige Halbfabrikate und mit entsprechendem Aufwand gehandhabt werden.

Saure Polyamide als Antiabsetzmittel werden beispielsweise in JP 2005 171 155 A und der WO 2011/052707 A1 beschrieben.

In der EP 1 188 779 A1 werden rheologisch wirksame Harnstoffurethan-Lösungen offenbart. Diese ermöglichen oft ein stark thixotropes Verhalten, zeigen aber häufig Einschränkungen hinsichtlich Pigmentorientierung.

Die DE 10 2006 010 721 A1, DE 10 2005 015 966 A1 und DE 10 2005 049 301 B3 beschreiben urethan- und/oder harnstoff-haltige Amide mit unpolaren hydrophoben Endgruppen.

Eine weitere flüssige Anwendungsalternative stellen Acrylatverdicker dar. Diese liegen in flüssiger Form vor, weisen jedoch eine starke pH-Abhängigkeit ihrer Wirkung auf, so dass sie in sauren Medien nicht eingesetzt werden können. Eine Alternative stellen Assoziativverdicker dar (zum Beispiel sogenannte Polyurethan-Verdicker), welche auf assoziativem Wege über hydrophobe Wechselwirkungen wirken. Ihr Verhalten ist jedoch stark systemspezifisch, wird oftmals durch andere Systemkomponenten beeinträchtigt (zum Beispiel Colöser oder Netz- und Dispergieradditive) und weist in vielen Fällen nicht die gewünschten Eigenschaften, z.B. hinsichtlich Elastizität auf.

Somit bestand die Aufgabe der vorliegenden Erfindung insbesondere in der Bereitstellung eines verbesserten entsprechend qualitativ hochwertigen, gut wirksamen Rheologiesteuerungsmittels mit verbesserten Eigenschaften vor allem hinsichtlich der Anti-Sedimentationswirkung und der pH-Unabhängigkeit der Wirkung.

Handelt es sich bei den erfindungsgemäßen Zubereitungen, vorzugsweise wässrigen Zubereitungen, um Beschichtungsmittel, so sollten diese neben den bereits genannten Vorteilen gegenüber nicht erfindungsgemäß additivierten Beschichtungsmitteln verbesserte Eigenschaften hinsichtlich Pigmentorientierung, insbesondere blättchenförmiger Effektpigmente und eine Verhinderung der Kantenflucht bewirken. Außerdem sollte das Standvermögen der Zubereitungen gegenüber mit gewöhnlichen Rheologiesteuerungsmitteln versehenen Zubereitungen verbessert sein. Im Falle von Formulierungen mit Effektpigmenten, insbesondere wässrigen Formulierungen, ermöglichen die erfindungsgemäßen Additive zusätzlich ein verbessertes Flop-Verhalten entsprechender Beschichtungen. Weitere Verbesserungen sind der folgenden Beschreibung und den Beispielen entnehmbar.

Vorstehende Aufgaben wurden überraschend gelöst durch die Bereitstellung von Harnstoff- und/oder Urethan-substituierten Amiden der allgemeinen Formel (I) beziehungsweise einem Rheologiesteuerungsmittels enthaltend oder bestehend aus Spezies der allgemeinen Formel (I) 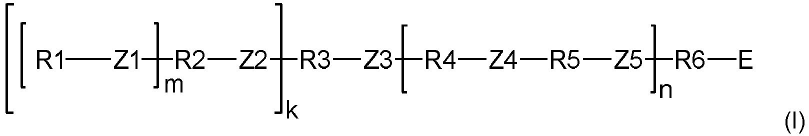 worin
die Reste R1 unabhängig voneinander gewählt sind aus der Gruppe bestehend aus Wasserstoff, für den Fall, dass m = 1 und Z1 eine kovalente Bindung ist, und
   Resten R^{a}-[O-(C=O)ᵤR^{b}]ᵥ, worin
      R^{a} gewählt ist aus der Gruppe bestehend aus
      gesättigten oder ungesättigten, vorzugsweise gesättigten, linearen oder verzweigten, vorzugsweise linearen, aliphatischen Kohlenwasserstoff-Resten mit 1 bis 40, vorzugsweise 1 bis 32, besonders bevorzugt 1 bis 24 und ganz besonders bevorzugt 1 bis 18 oder 1 bis 13 Kohlenstoffatomen;
      aromatischen Kohlenwasserstoffresten mit 6 bis 40, vorzugsweise 6 bis 32, besonders bevorzugt 6 bis 24 und ganz besonders bevorzugt 6 bis 18 oder 6 bis 12 oder 6 bis 10 Kohlenstoffatomen; und
      araliphatischen Kohlenwasserstoffresten mit 7 bis 40, vorzugsweise 7 bis 33, besonders bevorzugt 7 bis 25 und ganz besonders bevorzugt 7 bis 19 oder 7 bis 13 Kohlenstoffatomen;
   u für 0 oder 1 steht,
   v für 0 bis 50, vorzugsweise 0 bis 40, besonders bevorzugt 0 bis 25, ganz besonders bevorzugt 0 bis 15 steht,
   die Reste R^{b} unabhängig voneinander für zweiwertige organische Reste stehen, die
      wenn u = 0, für lineare oder verzweigte Alkylenreste oder Arylalkylenreste mit 2 bis 24, vorzugsweise 2 bis 8, besonders bevorzugt 2 bis 4 Kohlenstoffatome stehen, wobei, für den Fall, dass ein Alkylenrest zwei Kohlenstoffatome enthält, dieser einen Substituenten mit der Formel CH₂-O-(C=O)_{w}R^{c} tragen kann, worin w für 0 oder 1 steht und R^{c} für einen organischen Rest mit 2 bis 24, vorzugsweise 6 bis 18 Kohlenstoffatomen steht; und
      wenn u = 1, für lineare oder verzweigte Alkylenreste mit 3 bis 8, vorzugsweise 4 bis 6 Kohlenstoffatomen stehen; und
      in den Resten [O-(C=O)ᵤR^{b}] der Wert für u in jedem Rest unabhängig 0 oder 1 ist, wobei die Reste [O-(C=O)ᵤR^{b}] für die u = 0 gilt vorzugsweise in einem oder mehreren Blöcken angeordnet sind und die Reste [O-(C=O)ᵤR^{b}] für die u = 1 gilt vorzugsweise in einem oder mehreren Blöcken angeordnet sind;
die Reste R2 unabhängig voneinander für zweiwertige organische Reste stehen, die gewählt sind aus der Gruppe bestehend aus
   Kohlenwasserstoff-Resten mit 6 bis 40, vorzugsweise 6 bis 24, besonders bevorzugt 6 bis 13, ganz besonders bevorzugt 6 bis 10 Kohlenstoffatomen, welche optional eine oder mehrere Isocyanuratgruppen enthalten;
die Reste R3 unabhängig voneinander für (k+1)-wertige organische Reste stehen, die gewählt sind aus der Gruppe bestehend aus
   gesättigten oder ungesättigten, vorzugsweise gesättigten, linearen oder verzweigten, aliphatischen Kohlenwasserstoff-Resten mit 2 bis 40, vorzugsweise 2 bis 20, besonders bevorzugt 2 bis 8 und ganz besonders bevorzugt 2 bis 4 Kohlenstoffatomen, die gegebenenfalls ein oder mehrere Ethersauerstoffatome enthalten und/oder eine oder mehrere Hydroxylgruppen tragen;
   aromatischen Kohlenwasserstoffresten mit 6 bis 40, vorzugsweise 6 bis 20, besonders bevorzugt 6 bis 12 und ganz besonders bevorzugt 6 bis 10 Kohlenstoffatomen, wobei die aromatischen Kohlenwasserstoffreste gegebenenfalls ein oder mehrere lineare oder verzweigte Alkylsubstituenten mit 1 bis 10, bevorzugt 1 bis 4 Kohlenstoffatomen tragen;
   araliphatischen Kohlenwasserstoffresten mit 8 bis 40, vorzugsweise 8 bis 20, besonders bevorzugt 8 bis 12 und ganz besonders bevorzugt 8 bis 10 Kohlenstoffatomen, wobei die aromatischen Kohlenwasserstoffreste gegebenenfalls ein oder mehrere lineare oder verzweigte Alkylsubstituenten mit 1 bis 10, bevorzugt 1 bis 4 Kohlenstoffatomen tragen, und
   für einen Rest N-R2-Z1-R1, wenn Z2 für eine Gruppe NH-(C=O) steht, und wobei N in Z2 und Z3 an das jeweilige Kohlenstoffatom in NH-(C=O) gebunden ist und m = k = 1 gilt,
die Reste R4 unabhängig voneinander für zweiwertige organische Reste stehen, die gewählt sind aus der Gruppe bestehend aus
   gesättigten oder ungesättigten, vorzugsweise gesättigten, linearen oder verzweigten, vorzugsweise verzweigten, aliphatischen Kohlenwasserstoff-Resten mit 2 bis 40, vorzugsweise 4 bis 40, besonders bevorzugt 4 bis 38 und ganz besonders bevorzugt 30 bis 38, insbesondere 30 bis 34 Kohlenstoffatomen, wobei diese gegebenenfalls mit einer oder mehreren Hydroxylgruppen substituiert sind;
die Reste R5 unabhängig voneinander für zweiwertige organische Reste stehen, die gewählt sind aus der Gruppe bestehend aus
   gesättigten oder ungesättigten, vorzugsweise gesättigten, linearen, verzweigten oder cyclischen, vorzugsweise linearen, aliphatischen Kohlenwasserstoff-Resten mit 2 bis 40, vorzugsweise 2 bis 36, besonders bevorzugt 2 bis 13 oder 3 bis 13, und ganz besonders bevorzugt 2 bis 8 oder 4 bis 8 Kohlenstoffatomen, wobei die Kohlenwasserstoffreste gegebenenfalls Ethersauerstoffatome und/oder tertiäre Aminogruppen enthalten;
   araliphatischen Kohlenwasserstoffresten mit 8 bis 40, vorzugsweise 8 bis 32, besonders bevorzugt 8 bis 24 und ganz besonders bevorzugt 8 bis 18 oder 8 bis 16 oder 8 bis 12 Kohlenstoffatomen;
   aromatischen Kohlenwasserstoffresten mit 6 bis 40, vorzugsweise 6 bis 32, besonders bevorzugt 6 bis 24 und ganz besonders bevorzugt 6 bis 18 oder 6 bis 16 oder 6 bis 12 Kohlenstoffatomen;
die Reste R6 gewählt sind aus der Gruppe der aromatischen Reste mit 6 bis 40, vorzugsweise 6 bis 32, besonders bevorzugt 6 bis 24 und ganz besonders bevorzugt 6 bis 18 oder 6 bis 16 oder 6 bis 12 Kohlenstoffatomen oder ganz besonders bevorzugt wie die Reste R4 definiert sind und unabhängig von diesen gewählt sind;
die Reste E unabhängig voneinander für COOH oder COO^{⊖} Z^{⊕}, ganz besonders bevorzugt für COOH stehen, wobei Z^{⊕} gewählt ist aus der Gruppe bestehend aus Alkalimetallkationen, NH₄^{⊕}, heterocyclische Kationen, vorzugsweise Imidazoliumkationen, Tetrahydropyrimidiniumkationen, 1- bis 4-fach organisch substituierten Ammoniumionen, deren organische Subsituenten vorzugsweise gewählt sind aus der Gruppe der Alkylreste mit 1 bis 24 Kohlenstoffatomen, Arylreste mit 6 bis 24 Kohlenstoffatomen, Alkylarylreste mit 7 bis 25 Kohlenstoffatomen, wobei die Alkylreste, Arylreste und Alkylarylreste gegebenenfalls eine oder mehrere Hydroxylgruppen tragen und Erdalkalimetallkationen, vorzugsweise Calcium und/oder Magnesium, oder wobei Z^{⊕} entfällt, wenn Z5 eine protonierte oder quaternisierte Aminogruppe ist, und wobei im Falle der Erdalkalimetallkationen Z^{⊕} für ½ Z^{2⊕} steht,
die Reste Z1 unabhängig voneinander für eine Urethangruppe, eine Harnstoffgruppe oder eine kovalente Bindung, und vorzugsweise für -O-(C=O)-NH- stehen;
die Reste Z2 unabhängig voneinander für eine Urethangruppe, eine Harnstoffgruppe, vorzugsweise für -NH-(C=O)-O- stehen, oder, wenn R3 für einen Rest N-R2-Z1-R1 steht, Z2 für eine Gruppe NH-(C=O) steht;
die Reste Z3 für eine Amidgruppe, vorzugsweise für -NH-(C=O)- stehen;
die Reste Z4 für eine Amidgruppe, vorzugsweise für -(C=O)-NH- stehen;
die Reste Z5 unabhängig voneinander für eine Amidgruppe, vorzugsweise -NH-(C=O)-, oder für eine Aminogruppe stehen, wobei die Aminogruppe auch protoniert oder quaternisiert und somit als Ammoniumgruppe vorliegen kann und wobei in diesem Fall Z^{⊕} entfällt;
m für 1 bis 5, vorzugsweise 1 oder 2, besonders bevorzugt 1 steht;
n für 1 bis 12, vorzugsweise 1 bis 6, besonders bevorzugt 1 bis 4 oder 1 bis 3 und ganz besonders bevorzugt 1 oder 2 steht;
k für 1 bis 5, vorzugsweise 1 bis 4, besonders bevorzugt 1 bis 3, noch bevorzugter 1 oder 2 und ganz besonders bevorzugt für 1 steht.

Die Indices m, n, k und v sind für die einzelnen definierten Spezies - wie üblich - ganzzahlig. Bei Betrachtung der Gesamtheit der Spezies, insbesondere bei molekular uneinheitlichen Spezies, beispielsweise bei höheren Werten für v stellen diese Indices Zahlenmittelwerte der Summe aller Einzelspezies dar.

Wenn hierin von Kohlenwasserstoff-Resten gesprochen wird, so bedeutet dies der üblichen Definition entsprechend, dass die Reste nur aus Kohlenstoff und Wasserstoff aufgebaut sind. Dort, wo diese Reste gegebenenfalls zusätzlich Heteroatome wie beispielsweise Ethersauerstoffatome, Hydroxylgruppen oder tertiäre Aminogruppen enthalten dürfen, ist dies explizit angegeben. Für den Fall, dass ein Kohlenwasserstoffrest weitere kohlenstoff- und heteroatomhaltige Reste enthalten kann wie beispielsweise Isocyanuratgruppen, so wird dies ebenfalls explizit angegeben. Enthält ein Kohlenwasserstoff-Rest kohlenstoff- und heteroatomhaltige Reste, so zählen die in diesen Resten enthaltenden Kohlenstoffatome zur Gesamtzahl der Kohlenstoffatome des Kohlenwasserstoff-Rests, da der kohlenstoff- und heteroatomhaltige Rest in einem solchen Ausnahmefall als Bestandteil des Kohlenwasserstoff-Rests durch die explizite Benennung zugelassen ist.

Besonders bevorzugt wird R1 ausgewählt aus der Gruppe bestehend aus
(i) linearen oder verzweigten Alkyl- oder Alkenylresten mit 6 bis 24 Kohlenstoffatomen, und
(ii) Polyetherresten der Formel R^{a}-[O-R^{b}]ᵥ, worin R^{a} für einen linearen oder verzweigten Alkyl- oder Alkenylrest mit 1 bis 18 Kohlenstoffatomen steht, R^{b} für einen oder mehrere Reste aus der Gruppe bestehend aus C₂H₄, C₃H₆ und C₄H₈ steht und v eine ganze Zahl von 1 bis 25 ist.

Ganz besonders bevorzugt wird R1 ausgewählt aus der Gruppe bestehend aus
(i) linearen oder verzweigten Alkyl- oder Alkenylresten mit 8 bis 18 Kohlenstoffatomen, und
(ii) Polyetherresten der Formel R^{a}-[O-R^{b}]ᵥ, worin R^{a} für einen linearen oder verzweigten Alkyl- oder Alkenylrest mit 1 bis 6 Kohlenstoffatomen steht, R^{b} für einen oder mehrere Reste aus der Gruppe bestehend aus C₂H₄ und C₃H₆ steht und v eine ganze Zahl von 1 bis 15 ist.

Besonders bevorzugt wird R2 ausgewählt aus der Gruppe bestehend aus 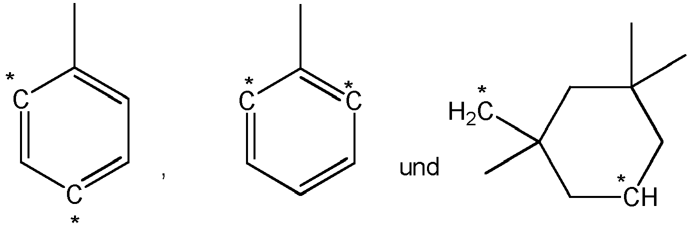 wobei m=1 ist, Z1 = -O-(C=O)-NH- und Z2 = -NH-(C=O)-O- ist, und die Symbole "*" die Bindungsstellen des jeweiligen Rests R2 an die Reste Z1 und Z2 kennzeichnen.

Besonders bevorzugt wird R3 ausgewählt aus der Gruppe bestehend aus
(i) Alkylenresten mit 2 bis 6 Kohlenstoffatomen, wobei k für eine ganze Zahl 1 steht, und
(ii) Alkylenresten mit 4 bis 6 Kohlenstoffatomen, die vorzugsweise mit Hydroxylgruppen substituiert sind, wobei k für eine ganze Zahl 1, 2 oder 3 steht.

Besonders bevorzugt wird R4 ausgewählt aus der Gruppe bestehend aus linearen oder verzweigten Alkylen- oder Alkenylenresten mit 4 bis 40 Kohlenstoffatomen.

Ganz besonders bevorzugt wird R4 ausgewählt aus der Gruppe bestehend aus verzweigten Alkylen- oder Alkenylenresten mit 30 bis 38 Kohlenstoffatomen, wobei Z4 und Z5 jeweils für eine Amidgruppe stehen.

Besonders bevorzugt wird R5 ausgewählt aus der Gruppe bestehend aus linearen oder verzweigten Alkylenresten mit 2 bis 13 Kohlenstoffatomen, Cycloalkylenresten 3 bis 13 Kohlenstoffatomen und Arylalkylenresten mit 7 bis 13 Kohlenstoffatomen.

Ganz besonders bevorzugt wird R5 ausgewählt aus der Gruppe bestehend aus linearen oder verzweigten Alkylenresten mit 4 bis 8 Kohlenstoffatomen, Cycloalkylenresten 4 bis 8 Kohlenstoffatomen und Arylalkylenresten mit 7 oder 8 Kohlenstoffatomen.

Besonders bevorzugt wird R6 ausgewählt aus den zuvor genannten für R4 bevorzugten Gruppen.

Besonders bevorzugt steht Z3 für eine Amidgruppe der Struktur -NR8-(C=O)-, worin R8 für H, einen Alkylrest mit 1 bis 12 Kohlenstoffatomen, einen Arylrest mit 6 bis 12 Kohlenstoffatomen oder einen Alkylarylrest mit 7 bis 12 Kohlenstoffatomen steht, besonders bevorzugt für Wasserstoff steht. Weniger bevorzugt steht hierin R8 für einen Rest -R3'[-Z2-R2-[Z1-R1]_{m'}]_{k'}, worin R3' ein (k'+1)-wertiger organischer Rest ist, der im Übrigen wie Rest R3 definiert ist, R1, R2, Z1 und Z2 wie in Formel (I) definiert sind, m' wie m definiert ist, mit der Maßgabe, dass k = 1 bis 4, k' = 1 bis 4 und k + k' = 2 bis 5 gilt, und vorzugsweise k + k' = 2 bis 4, besonders bevorzugt k + k' = 2 oder 3 und ganz besonders bevorzugt k + k' = 2 ist.

Besonders bevorzugt steht E für eine Gruppe COOH.

Vorzugsweise beträgt das zahlenmittlere Molekulargewicht der Spezies der allgemeinen Formel (I) (bestimmt mittels Gelpermeationschromatographie wie im experimentellen Teil dieser Schrift ausführlich erläutert) 1000 bis 7500 g/mol, besonders bevorzugt 1400 bis 4000 g/mol, ganz besonders bevorzugt 1600 bis 3800 g/mol, besser noch 2000 bis 3000 g/mol.

### Rheologiesteuerungsmittel

Die erfindungsgemäßen Rheologiesteuerungsmittel enthalten oder bestehen aus einer oder mehreren der Spezies der allgemeinen Formel (I). Als erfindungsgemäße Rheologiesteuerungsmittel werden die Reaktionsprodukte, die nach dem erfindungsgemäßen Verfahren erhalten werden, bezeichnet. Im Idealfall bestehen diese aus einer oder mehreren der Spezies der allgemeinen Formel (I). Die erfindungsgemäßen Rheologiesteuerungsmittel sind Bestandteile der weiter unten beschriebenen Rheologiesteuerungsmittel-Zusammensetzungen, wobei letztere in der Regel Lösemittel, insbesondere polare, aprotische Lösemittel und gegebenenfalls ionogene Verbindungen wie insbesondere Salze enthalten. Sowohl die Rheologiesteuerungsmittel als auch die Rheologiesteuerungsmittel-Zusammensetzungen liegen in der Regel in bei Raumtemperatur (25 °C) flüssiger Form vor. Die Rheologiesteuerungsmittel-Zusammensetzungen stellen die übliche Lager- und Lieferformen der Additive dar.

### Verfahren zur Herstellung der erfindungsgemäßen Rheologiesteuerungsmittel

In einem bevorzugten Herstellverfahren wird das erfindungsgemäße Rheologiesteuerungsmittel wie nachfolgend beschrieben durch Umsetzung eines harnstoffgruppen- und/oder urethangruppen-haltigen Bausteins (A) mit einem amidgruppenhaltigen Baustein (B) hergestellt. Die Definitionen der Reste und Indices in den Bausteinen (A) und (B) sowie den bei deren Herstellung verwendeten Spezies entsprechen den Definitionen wie sie in Formel (I) und deren bevorzugten Ausführungsformen verwendet wurden. Generell gilt im Rahmen dieser Erfindung, dass jeder Rest, jede Gruppe und jeder Index auch in verschiedenen Spezies, wie beispielsweise Ausgangsverbindungen und Endprodukten die gleiche Bedeutung hat. Gleiches gilt für die bevorzugten Auswahlen der Resten und Gruppen beziehungsweise die bevorzugten Zahlenbereiche der Indices. Sollte in einem Fall ausnahmsweise eine andere Bevorzugung vorliegen, so ist dies entsprechend angegeben.

### Harnstoffgruppen-und/oder urethangruppen-haltiger Baustein (A)

Der Baustein (A) weist eine gegenüber Alkoholen und/oder Aminen reaktive Gruppe auf, bei der es sich bevorzugt um eine Isocyanat-Gruppe (Alternative (A1)) oder Uretdion-Gruppe (Alternative (A2)) handelt.

### Alternative (A1): Harnstoffgruppen- und/oder urethangruppen-haltiger Baustein

Zunächst wird ein Isocyanat-funktioneller Baustein (A1) der Formel (II)

[R1-Z1]ₘ-R2-NCO (II)

hergestellt, indem
ein oder mehrere Spezies der Formel (III)

R1-X-H (III)

worin X für O oder N(R7) steht, wobei R7 für H, einen Alkylrest mit 1 bis 12 Kohlenstoffatomen, einen Arylrest mit 6 bis 12 Kohlenstoffatomen oder einen Alkylarylrest mit 7 bis 12 Kohlenstoffatomen steht,
mit einer oder mehreren Spezies der allgemeinen Formel (IV)

R2(NCO)ₘ₊₁ (IV)

umgesetzt werden.

Bevorzugt steht X für Sauerstoff und m für 1 bis 4, besonders bevorzugt 1 oder 2 und ganz besonders bevorzugt steht m für 1.

Als Diisocyanate (m = 1) können vorzugsweise alle Diisocyanate eingesetzt werden, die unter die Definition der Reste R2 und des Index m gemäß der allgemeinen Formel (I) fallen. Auch deren Mischungen können eingesetzt werden.

Beispiele solcher Diisocyanate sind 1,4-Tetramethylendiisocyanat, 1,6-Hexamethylendiisocyanat, 2,2,4-Trimethyl-1,6-Hexamethylendiisocyanat, 1,10-Decamethylendiisocyanat, 1,4-Cyclohexylendiisocyanat, p-Phenylen-Diisocyanat, m-Phenylen-Diisocyanat, 2,6-Toluylendiisocyanat, 2,4-Toluylendiisocyanat und deren Mischungen, p- und m-Xylylendiisocyanat, 1,5-Naphthylendiisocyanat, Isophorondiisocyanat, 4-4',-Diisocyanatodicyclohexylmethan, 3,3'-Dimethyl-4,4'-Bisphenylendiisocyanat, 3,3'-Dimethyl-Diisocyanatodiphenylmethan, die Isomerenmischungen 2,4'- und 4-4'-Diisocyanatodiphenylmethan und C36-Dimerdiisocyanat.

Besonders bevorzugte Isocyanate sind Toluylendiisocyanat (TDI) und Isophorondiisocyanat (IPDI), auch in Kombination oder als Mischung ihrer Isomere, insbesondere als Mischung aus 2,4-TDI und 2,6-TDI.

Die Herstellung derartiger bevorzugter Monoaddukte aus einem Diisocyanat und einem Monoalkohol oder Monoamin ist beispielsweise auch in EP 1 188 779 A1 beschrieben.

### Alternative (A2): Harnstoffgruppen-und/oder urethangruppen-haltiger Baustein

Durch Dimerisierung von Diisocyanaten sind bekanntlich diisocyanatfunktionelle Uretdione zugänglich. Diese können an den zwei freien Isocyanat-Gruppen mit einer oder mehreren Spezies der allgemeinen Formel (III)

R1-X-H (III)

worin X für O oder N(R7) steht, wobei R7 für H, einen Alkylrest mit 1 bis 12 Kohlenstoffatomen, einen Arylrest mit 6 bis 12 Kohlenstoffatomen oder einen Alkylarylrest mit 7 bis 12 Kohlenstoffatomen steht,
unter Beibehaltung der Uretdionfunktion zu entsprechenden Uretdion-funktionellen Urethanen bzw. Harnstoffen umgesetzt werden.

Besonders geeignet sind die diisocyanatfunktionellen Uretdiondimere der unter Alternative (A1) genannten Diisocyanate.

Vorzugsweise steht X für Sauerstoff, so dass die freien Isocyanatgruppen-Gruppen zu Urethangruppen abreagieren. Es wird so ein Uretdion-funktionelles Diurethan erhalten.

Besonders bevorzugte isocyanatfunktionelle Uretdione sind die Dimere von Hexamethylendiisocyanat, TDI und IPDI.

Von den Alternativen (A1) und (A2) ist Alternative (A1) bevorzugt.

### Amidgruppenhaltiger Baustein (B)

Desweiteren wird ein amidgruppenhaltiger Baustein (B) der Formel (V)

(HX)ₖ-R3-Z3-[R4-Z4-R5-Z5]ₙ-R6-E' (V)

hergestellt, worin E' für E oder COOR^{d} steht und R^{d} eine Schutzgruppe darstellt, die nach der Reaktion des Bausteins (B) mit Baustein (A) vorzugsweise hydrolytisch in Gruppe E überführt wird. Die Gruppe R^{d} steht vorzugsweise für einen Rest gewählt aus der Gruppe bestehend aus Alkylgruppen, Alkenylgruppen oder Alkylarylgruppen, insbesondere Methyl-, Ethyl-, n-Propyl-, Isopropyl-, Allyl-, n-Butyl-, sec-Butyl, t-Butyl-, Benzhydryl- und Benzylgruppe sowie Trialkylsilylgruppen, insbesondere der Trimethylsilylgruppe.

Vorzugsweise steht E' für eine Gruppe E, ganz besonders bevorzugt für eine Gruppe COOH.

Der amidgruppenhaltige Baustein (B) wird vorzugsweise auf einem der folgenden Wege hergestellt.

### Alternative B1:

Eine oder mehrere Spezies der allgemeinen Formel (VI)

Y-(O=C)-R4-(C=O)-Y' (VI)

wobei Y und Y' unabhängig voneinander für OR^{e} oder Halogenid stehen oder Y und Y' miteinander verbunden sind und gemeinsam als Y-Y' für ein Sauerstoffatom stehen, und wobei R^{e} für Wasserstoff oder R^{d} steht,
werden mit einem oder mehreren Diaminen der allgemeinen Formel (VII)

   H₂N-R5-NH₂ (VII)
gegebenenfalls in Gegenwart einer oder mehrerer Spezies der allgemeinen Formel (VIII)

(HX)ₖ-R3-NH(R8) (VIII)

umgesetzt, wobei X wie in Formel (III) definiert ist und vorzugsweise für Sauerstoff steht, R8 vorzugsweise für H, oder für
einen Alkylrest mit 1 bis 12 Kohlenstoffatomen, der gegebenenfalls ein oder mehrere Ethersauerstoffatome enthält und/oder eine oder mehrere Hydroxylgruppen trägt, einen Arylrest mit 6 bis 12 Kohlenstoffatomen,
einen Alkylarylrest mit 7 bis 12 Kohlenstoffatomen, oder weniger bevorzugt für einen Rest -R3'[-Z2-R2-[Z1-R1]_{m'}]_{k'} steht,
worin
R3' ein (k'+1)-wertiger organischer Rest ist, der im Übrigen wie Rest R3 definiert ist,
R1, R2, Z1 und Z2 wie in Formel (I) definiert sind,
m' wie m definiert ist, mit der Maßgabe, dass
k = 1 bis 4, k' = 1 bis 4 und k + k' = 2 bis 5 gilt, vorzugsweise k + k' = 2 bis 4, besonders bevorzugt k + k' = 2 oder 3, ganz besonders bevorzugt k + k' = 2 ist,
und
und im Falle der Bildung eines endständigen Restes -R5-NH₂, dieser Rest
(a) mit einer oder mehreren Spezies der allgemeinen Formel (VIa)

   Y-(O=C)-R6-E' (VIa)

   worin, falls E' = (C=O)-Y' ist, Y und Y' wie in Formel (VI) definiert sind, oder
(b) mit einer oder mehreren Spezies der allgemeinen Formel (X)

   H₂C=C(R^{f})-E' (X)

   wobei R^{f} für Wasserstoff oder einen Alkylrest mit 1 bis 2 Kohlenstoffatomen, besonders bevorzugt für Wasserstoff steht,
in einem solchen stöchiometrischen Verhältnis zur Reaktion bringt, dass der resultierende amidgruppenhaltige Baustein (B) genau eine Endgruppe E' enthält.

Bei den Dicarbonsäuren handelt es sich vorzugsweise um aliphatische, cycloaliphatische oder aromatische, lineare oder verzweigte, gesättigte oder ungesättigte Dicarbonsäuren mit wenigstens 2, besonders bevorzugt 3 bis 40 Kohlenstoff-Atomen.

Beispiele solcher Dicarbonsäuren sind Adipinsäure, Oxalsäure, Malonsäure, Bernsteinsäure, Glutarsäure, Pimelinsäure, Korksäure, Sebacinsäure, Azelainsäure, Undecandisäure, 1,11-Undecandicarbonsäure, Dodecandisäure, Hexadecandisäure, Dokosandisäure Maleinsäure, Fumarsäure, Terephthalsäure oder Isophthalsäure, alleine oder in Mischungen eingesetzt. Säureanhydride wie Maleinsäureanhydrid, Glutarsäureanhydrid, Phthalsäureanhydrid und Bernsteinsäureanhydrid, welche gegebenenfalls mit Alkyl- oder Alkylengruppen modifiziert sind wie z. B. Dodecenylbernsteinsäureanhydrid, sind ebenfalls in der Erfindung eingeschlossen. Polymere Dicarbonsäuren wie z. B. die Dicarbonsäure des Polybutadiens können ebenso verwendet werden wie hydroxyfunktionelle Dicarbonsäuren wie z. B. Weinsäure, Äpfelsäure und Hydroxyphthalsäure.

Auch dimerisierte Fettsäuren, dem Fachmann als Dimersäuren bekannt, sind als Dicarbonsäuren zur Herstellung der erfindungsgemäßen Additive bevorzugt. Diese Dimersäuren können sowohl einen geringen Monomergehalt als auch einen Anteil von vorzugsweise nicht mehr als 5 Gewichtsprozent an Trimersäure aufweisen.

Geeignete oligomerisierten Fettsäuren sind vorzugsweise Dimere von ungesättigten Monocarbonsäuren, wobei die Monocarbonsäuren üblicherweise 10 bis 28 Kohlenstoffatome, vorzugsweise 12 bis 24 Kohlenstoffatome, noch bevorzugter 14 bis 20 Kohlenstoffatome und ganz besonders bevorzugt 16 bis 18 Kohlenstoffatome aufweisen.

Ebenfalls geeignete oligomerisierten Fettsäuren sind vorzugsweise Dimere von ungesättigten langkettigen Monocarbonsäuren, wobei die langketigen Monocarbonsäuren üblicherweise 10 bis 28 Kohlenstoffatome, vorzugsweise 12 bis 24 Kohlenstoffatome, noch bevorzugter 14 bis 20 Kohlenstoffatome und ganz besonders bevorzugt 16 bis 18 Kohlenstoffatome aufweisen, mit ungesättigten kurzkettigen Monocarbonsäure, wobei die kurzkettigen Monocarbonsäuren 3 bis 9 Kohlenstoffatome aufweisen. Ein typisches Beispiel für ein derartiges Dimer ist 5-(oder 6-)Carboxy-4-hexylcyclohex-2-ene-1-oktansäure, eine monocyclische Dicarbonsäure mit 21 Kohlenstoffatomen.

Bevorzugte Fettsäuren zur Herstellung der Dimersäuren sind z.B. Tallöl-Fettsäure, Ölsäure, Talgfettsäuren, Linolsäure, Linolensäure (cis- und trans-Isomere), Myristoleinsäure, cis-6-Hexadecensäure, (9E,12E)-octadeca-9,12-diensäure, Docosahexaensäure, Abietinsäure, Pimarsäure, Hexadecatriensäure, Parinarsäure, Eicosatriensäure, Eicosa-tetraensäure, Eicosapentaensäure, Heneicosapentaensäure, Docosapentaensäure, Docosahexaensäure, Tetracosapentaensäure, Tetracosahexaensäure (Nisinsäure), α-Elaeostearinsäure, β-Elaeostearinsäure, α-Calendulasäure, β-Calendulasäure, Crepeninsäure, Dihomo-γ-Linolensäure, Petroselinsäure, Punicasäure, 10E,12Z-Octadeca-9,11-diensäure, γ-Linolensäure, Eicosadiensäure, Arachidonsäure, Bosseopentaensäure, Docosadiensäure, Docosatetraensäure, Docosapentaensäure, Tetracosatetraensäure, Tetracosapentaensäure, 5-Dodecensäure, 7-Tetradecensäure, Palmitoleinsäure, cis-13-Eicosensäure, Vaccensäure, 15-Docosensäure, 17-Tetracosensäure, Elaidinsäure, cis-11-Eicosensäure, Metsäure, Erucasäure, Nervonsäure.

Beispiele für geeignete hydroxyfunktionelle ungesättigte Fettsäuren zur Herstellung von Dimersäuren sind Dimorphencolsäure, Densipolsäure und Lesquerolsäure.

In einer besonders bevorzugten Ausführungsform gilt für die Spezies der Formel (VI), dass in dieser R4 für einen Kohlenwasserstoffrest mit 30 bis 34 Kohlenstoffatomen steht. Ganz besonders bevorzugt stehen in (VI) die Reste Y und Y' jeweils für eine Hydroxylgruppe.

Weiterhin ist besonders bevorzugt, dass in der Spezies der Formel (VIa) R6 wie R4 definiert ist, ganz besonders bevorzugt identisch R4 ist. Ganz besonders bevorzugt stehen in (VIa) der Rest Y für eine Hydroxylgruppe und der Rest E' für eine Gruppe COOH.

Bei den Diaminen H₂N-R5-NH₂ handelt es sich vorzugsweise um Ethylendiamin, Neopentandiamin, 1,2- und 1,3-Propandiamin, 1,4-Butandiamin, 1,5-Pentandiamin, 2-Butyl-2-ethyl-1,5-Pentandiamin, 1,6-Hexamethylendiamin, 1,8-Octamethylendiamin, 1,12-Dodecamethylendiamin, Cyclohexyldiamin, 4,4'-Diaminodicyclohexylmethan, 3,3'-Dimethyl-4,4'-Diaminodicyclohexylmethan, Isophorondiamin, 4,4'-Diaminodiphenylmethan, sowie para- und meta-Xylylendiamin.

Ebenfalls eingesetzt werden können als Diamine solche, die Ethersauerstoffatome enthalten, wie beispielsweise 4,7-Dioxadecan-1,10-diamin, 4,11-Dioxatetradecan-1,14-diamin, 4,7,10-Trioxadecan-1,13-diamin, Polyoxyalkylen-diamine, welche Ethylenoxid- und/oder Propylenoxid-Gruppen, statistisch oder blockweise angeordnet, enthalten, ein zahlenmittleres Molekulargewicht von 148 bis 4000 g/mol besitzen und beispielsweise als Jeffamine® D 230, D 400, D 2000, D 4000 und Jeffamine® ED 600, ED 900, ED 2003 und EDR 148 von Huntsman erhältlich sind, Polytetrahydrofurandiamine wie z. B. Bis(3-Aminopropyl)polytetrahydrofuran 350, 750, 1100 und 2100 (die Zahlen geben das ungefähre Molekulargewicht an).

Bevorzugt werden 1,6-Hexamethylendiamin, 1,8-Octamethylendiamin und meta-Xylylendiamin eingesetzt.

Ebenfalls können Amine vom Typus H₂N-R"-NR'-R"-NH₂ verwendet werden, wobei R' für (C1-C18)-Alkyl oder (C1-C4)-Alkoxy steht und R" unabhängig für einen C1- bis C6-Alkylenrest steht. Ein Beispiel hierfür ist N,N'-Bis-(3-aminopropyl)methylamin.

Als Spezies der allgemeinen Formel (HX)ₖ-R3-NH(R8) werden vorzugsweise Monoaminoalkohole mit primärer Aminogruppe verwendet, wie beispielsweise 2-Aminoethanol, 3-Amino-1-propanol, 1-Amino-2-propanol, 2-(2-Aminoethoxy)ethanol, 2-Ethyl-2-amino-1,3-propandiol und 2-Amino-2-hydroxymethyl-1,3-propandiol. Es können jedoch auch beispielsweise Monoaminoalkohole mit einer sekundären Aminogruppe wie beispielsweise Diethanolamin, 3-(2-Hydroxyethylamino)-1-propanol oder Diisopropanolamin Verwendung finden. Besonders bevorzugt werden als Spezies der allgemeinen Formel (HX)ₖ-R3-NH(R8) folgende Monoaminoalkohole mit primärer Aminogruppe eingesetzt: 2-Aminoethanol, 3-Amino-1-propanol, 1-Amino-2-propanol, 2-(2-Aminoethoxy)ethanol und 2-Amino-2-hydroxymethyl-1,3-propandiol, worunter 2-Aminoethanol und 2-Amino-2-hydroxymethyl-1,3-propandiol ganz besonders bevorzugt sind. Alle vorgenannten Amine können an den Hydroxylgruppen alkoxyliert, insbesondere ethoxyliert und/oder propoxyliert vorliegen.

Das stöchiometrische Verhältnis der Ausgangsverbindungen wird so gewählt, dass der resultierende amidgruppenhaltige Baustein (B) genau eine Endgruppe E' enthält.

### Alternative B2:

Alternativ zu B1 können zunächst ein oder mehrere Aminocarbonsäuren der allgemeinen Formeln (IXa) und/oder (IXb)

HOOC-R4-NH₂ (IXa)

und/oder

HOOC-R5-NH₂ (IXb)

in einer Polykondensationsreaktion in Gegenwart einer oder mehrerer Spezies der allgemeinen Formel (VIII)

(HX)ₖ-R3-NH(R8) (VIII),

worin X wie in Formel (III) definiert ist und vorzugsweise für Sauerstoff steht, R8 vorzugsweise für H steht, oder für
einen Alkylrest mit 1 bis 12 Kohlenstoffatomen, der gegebenenfalls ein oder mehrere Ethersauerstoffatome enthält und/oder eine oder mehrere Hydroxylgruppen trägt,
einen Arylrest mit 6 bis 12 Kohlenstoffatomen,
einen Alkylarylrest mit 7 bis 12 Kohlenstoffatomen, oder weniger bevorzugt für einen Rest -R3'[-Z2-R2-[Z1-R1]_{m'}]_{k'} steht,
worin
R3' ein (k'+1)-wertiger organischer Rest ist, der im Übrigen wie Rest R3 definiert ist,
R1, R2, Z1 und Z2 wie in Formel (I) definiert sind,
m' wie m definiert ist, mit der Maßgabe, dass
k = 1 bis 4, k' = 1 bis 4 und k + k' = 2 bis 5 gilt, vorzugsweise k + k' = 2 bis 4, besonders bevorzugt k + k' = 2 oder 3, ganz besonders bevorzugt k + k' = 2 ist,
und die so erhaltenen Spezies wiederum
(a) mit einer oder mehreren Spezies der allgemeinen Formel (VIa)

   Y-(O=C)-R6-E' (VIa)

   worin, falls E' = (C=O)-Y' ist, Y und Y' wie in Formel (VI) definiert sind,
   oder
(b) mit einer oder mehreren Spezies der allgemeinen Formel (X)

   H₂C=C(R^{f})-E' (X)

   wobei R^{f} für Wasserstoff oder einen Alkylrest mit 1 bis 2 Kohlenstoffatomen, besonders bevorzugt für Wasserstoff steht,
   in einem solchen stöchiometrischen Verhältnis zur Reaktion bringt, dass der resultierende amidgruppenhaltige Baustein (B) genau eine Endgruppe E' enthält.

### Alternative B3:

Als weitere Alternative können ein oder mehrere Lactame der allgemeinen Formeln (Xla) und/oder (Xlb) 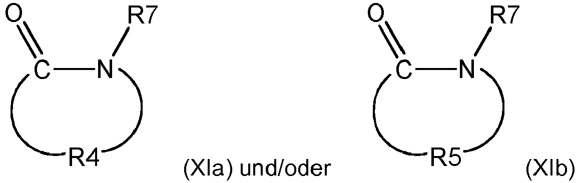 wobei mindestens ein Rest R7 für Wasserstoff steht, durch ringöffnende Polymerisation
(a) in Gegenwart einer oder mehrerer Spezies der allgemeinen Formel (XII)

   (HO)ₖ-R3-COOH (XII)

   oder
(b) in Gegenwart einer oder mehrerer Spezies der allgemeinen Formel

   (HX)ₖ-R3-NH(R8) (VIII),

   worin
   X wie in Formel (III) definiert ist und vorzugsweise für Sauerstoff steht, R8 vorzugsweise für H steht, oder für
   einen Alkylrest mit 1 bis 12 Kohlenstoffatomen, der gegebenenfalls ein oder mehrere Ethersauerstoffatome enthält und/oder eine oder mehrere Hydroxylgruppen trägt,
   einen Arylrest mit 6 bis 12 Kohlenstoffatomen,
   einen Alkylarylrest mit 7 bis 12 Kohlenstoffatomen, oder weniger bevorzugt für einen Rest -R3'[-Z2-R2-[Z1-R1]_{m'}]_{k'} steht,
   worin
   R3' ein (k'+1)-wertiger organischer Rest ist, der im Übrigen wie Rest R3 definiert ist,
   R1, R2, Z1 und Z2 wie in Formel (I) definiert sind,
   m' wie m definiert ist, mit der Maßgabe, dass
   k = 1 bis 4, k' = 1 bis 4 und k + k' = 2 bis 5 gilt, vorzugsweise k + k' = 2 bis 4, besonders bevorzugt k + k' = 2 oder 3, ganz besonders bevorzugt k + k' = 2 ist,
   umgesetzt werden, wobei im Fall (b) die so erhaltenen Spezies wiederum
(c) mit einer oder mehreren Spezies der allgemeinen Formel (VIa)

   Y-(O=C)-R6-E' (VIa)

   worin, falls E' = (C=O)-Y' ist, Y und Y' wie in Formel (VI) definiert sind,
   oder
(d) mit einer oder mehreren Spezies der allgemeinen Formel (X)

   H₂C=C(R^{f})-E' (X)

   wobei R^{f} für Wasserstoff oder einen Alkylrest mit 1 bis 2 Kohlenstoffatomen, besonders bevorzugt für Wasserstoff steht,
in einem solchen stöchiometrischen Verhältnis zur Reaktion bringt, dass der resultierende amidgruppenhaltige Baustein (B) genau eine Endgruppe E' enthält.

### Bildung der Spezies der Formel (I)

Durch Umsetzung des harnstoffgruppen- und/oder urethangruppenhaltigen Bausteins (A) mit dem amidgruppenhaltigen Baustein (B) wird die Struktur (la) 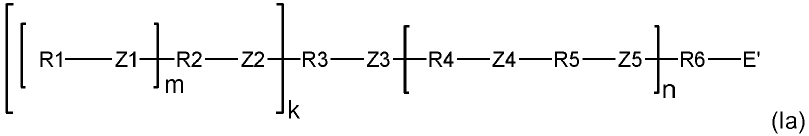
gebildet. Diese entspricht der Formel (I) wenn E' für E steht. Steht E' für COOR^{d}, worin R^{d} eine Schutzgruppe darstellt, so muss die Schutzgruppe in die Gruppe E überführt werden. Dies kann beispielsweise durch Hydrolyse unter Abspaltung des Alkohols R^{d}OH
geschehen. Gegebenenfalls erfolgt dabei oder anschließend eine Versalzung der Carbonsäuregruppe.

### Prinzipiell kann die Herstellung der Spezies der Formel (I) erfolgen indem

(i) der Baustein (A) nach dem Verfahren (A1) und der Baustein (B) nach dem Verfahren nach (B1(a)) hergestellt wird und die Bausteine anschließend zu einer Spezies der allgemeinen Formel (la) umgesetzt werden, und falls E' für COOR^{d} steht, E' in E umgesetzt wird; oder
(ii) der Baustein (A) nach dem Verfahren (A1) und der Baustein (B) nach dem Verfahren nach (B1(b)) hergestellt wird und die Bausteine anschließend zu einer Spezies der allgemeinen Formel (Ia) umgesetzt werden, und falls E' für COOR^{d} steht, E' in E umgesetzt wird; oder
(iii) der Baustein (A) nach dem Verfahren (A1) und der Baustein (B) nach dem Verfahren nach (B2(a)) hergestellt wird und die Bausteine anschließend zu einer Spezies der allgemeinen Formel (Ia) umgesetzt werden, und falls E' für COOR^{d} steht, E' in E umgesetzt wird; oder
(iv) der Baustein (A) nach dem Verfahren (A1) und der Baustein (B) nach dem Verfahren nach (B2(b)) hergestellt wird und die Bausteine anschließend zu einer Spezies der allgemeinen Formel (Ia) umgesetzt werden, und falls E' für COOR^{d} steht, E' in E umgesetzt wird; oder
(v) der Baustein (A) nach dem Verfahren (A1) und der Baustein (B) nach dem Verfahren nach (B3(a)) hergestellt wird und die Bausteine anschließend zu einer Spezies der allgemeinen Formel (la) umgesetzt werden, und falls E' für COOR^{d} steht, E' in E umgesetzt wird; oder
(vi) der Baustein (A) nach dem Verfahren (A1) und der Baustein (B) nach dem Verfahren nach (B3(b)(c)) hergestellt wird und die Bausteine anschließend zu einer Spezies der allgemeinen Formel (Ia) umgesetzt werden, und falls E' für COOR^{d} steht, E' in E umgesetzt wird; oder
(vii) der Baustein (A) nach dem Verfahren (A1) und der Baustein (B) nach dem Verfahren nach (B3(b)(d)) hergestellt wird und die Bausteine anschließend zu einer Spezies der allgemeinen Formel (Ia) umgesetzt werden, und falls E' für COOR^{d} steht, E' in E umgesetzt wird.

Insbesondere können eine oder mehrere aus Verfahren (A1) und/oder Verfahren (A2) resultierende Spezies mit einer oder mehreren aus Verfahren (B1), Verfahren (B2) und/oder Verfahren (B3) resultierenden Spezies umgesetzt werden. Falls E' für COOR^{d} steht, wobei R^{d} eine Schutzgruppe darstellt, wird anschließend die Schutzgruppe abgespalten, wobei E' gegebenenfalls unter Versalzung, in E überführt wird.

In vorgenannten Verfahrensabläufen (i) bis (vii) kann anstelle des Verfahrens (A1), auch das weniger bevorzugte Verfahren (A2) zur Herstellung des Bausteins (A) durchgeführt werden.

Besonders bevorzugt sind die Verfahrensabläufe (i) und (ii), ganz besonders bevorzugt ist Verfahrensablauf (i).

Insbesondere ist der Verfahrensablauf (i) bevorzugt, bei dem die Spezies der allgemeinen Formeln (VI) und (VIa) identisch sind und die Stöchiometrie der Komponenten so gewählt wird, dass bei der Herstellung von Baustein (B) erhalten nach dem Verfahren (B1) direkt ein Baustein mit dem endständigen Rest -R6-E entsteht, das heißt, dass die Verfahrensschritte B1(a) und B1(b) entfallen.

### Lager- und Lieferformen der erfindungsgemäßen Rheologiesteuerungsmittel

Für die praktische Anwendbarkeit ist es zweckmäßig, die erfindungsgemäßen Rheologiesteuerungsmittel in flüssiger Form, vorzugsweise in unter Anwendungsbedingungen flüssiger Form, besonders bevorzugt in bei Raumtemperatur, das heißt bei 25°C, flüssiger Form zur Verfügung zu stellen. Der Begriff "flüssige Form" ist hierin weitgefasst, so dass hierunter beispielsweise jegliche flüssige Form von dünnflüssig über viskos und hochviskos bis hin zu pastös oder gelartig zu verstehen ist. Vorzugsweise liegen auch die diese erfindungsgemäßen Rheologiesteuerungsmittel enthaltenden, erfindungsgemäßen Rheologiesteuerungsmittel-Zusammensetzungen bei Raumtemperatur in flüssiger Form vor, besonders bevorzugt als Lösung des Rheologiesteuerungsmittels in einem Lösemittel.

Als Lösemittel geeignet sind alle bekannten organischen Lösemittel, so zum Beispiel Alkohole, Ester, aliphatische und aromatische Kohlenwasserstoffe, halogenierte Lösungsmittel, insbesondere polar-aprotische Lösemittel.

In einer besonderen Ausführungsform liegen die erfindungsgemäßen Rheologiesteuerungsmittel-Zusammensetzungen als Lösung in aprotischen organischen Lösemitteln vor. Besonders geeignet sind polare, aprotische organische Lösemittel, ganz besonders bevorzugt solche, die gewählt werden aus der Gruppe der Amide, Lactame, Sulfoxide und ionischen Flüssigkeiten (das heißt organischen Salzen mit einem Schmelzpunkt ≤ 80 °C). Es ist daher bevorzugt, die Herstellung entsprechender erfindungsgemäßer Rheologiesteuerungsmittel-Zusammensetzungen in diesen polaren, aprotischen organischen Lösemitteln beziehungsweise ionischen Flüssigkeiten durchzuführen.

Besonders bevorzugte polare, aprotische organische Lösemittel sind hierbei substituierte oder unsubstituierte, vorzugsweise unsubstituierte N-Alkylbutyrolactame, Dialkylsulfoxide, substituierte oder unsubstituierte Amide, insbesondere Carbonsäureamide. Beispiele für N-Alkylbutyrolactame sind N-Methylbutyrolactam, N-Ethylbutyrolactam, N-Octylbutyrolactam und N-Hydroxyethylbutyrolactam. Ein Beispiel für ein Dialkylsulfoxid ist Dimethylsulfoxid. Beispiele für Amide sind N,N-Dimethylformamid, N,N-Dimethylacetamid, N,N-Dialkylamidoalkylester, N,N-Dialkylamidoalkylether, Hexamethylphosphorsäuretriamid und Acylmorpholine. Bevorzugte als Lösemittel geeignete ionische Flüssigkeiten sind substituierte Imidazoliumsalze wie z.B. 1-Ethyl-3-methylimidazoliumacetat, 1-Ethyl-3-methylimidazoliumacetat, 1-Ethyl-3-methylimidazoliumethylsulfat, 1-Butyl-3-methylimidazoliumethylsulfat, 1-Ethyl-3 methylimidazoliumthiocyanat und 1-Butyl-3-methylimidazoliumthiocyanat. Entsprechende Lösemittel können auch in Kombinationen eingesetzt werden.

Unter den Lösemitteln sind Dimethylsulfoxid und insbesondere solche N-Alkylbutyrolactame bevorzugt, deren stickstoffgebundener Alkylrest linear oder verzweigt, vorzugsweise linear ist und der Alkylrest 1 bis 20 oder vorzugsweise 1 bis 16, besonders bevorzugt 1 bis 12 und ganz besonders bevorzugt 3 bis 10 Kohlenstoffatome enthält, sowie auch N,N-Dimethylamidoalkylester, N,N-Dimethylamidoalkylether, Formylmorpholin und Acetylmorpholin.

Je nach Anwendungsfall werden solche Lösemittel besonders bevorzugt, die eine entsprechende Mischbarkeit mit Wasser aufweisen, so z.B. N-Methylbutyrolactam, N-Ethylbutyrolactam, N-Propylbutyrolactam, N-Butylbutyrolactam, und Dimethylsulfoxid.

Um die Lösungseigenschaften der Lösemittel zu verbessern, werden häufig auch Salze, das heißt ionogene Verbindungen zugesetzt. Bevorzugt handelt es sich dabei um Salze von Kationen der Hauptgruppen I und II des Periodensystems der Elemente (Alkali- und Erdalkalimetalle) oder um Ammoniumsalze, bevorzugt um Lithium-, Calcium- oder Magnesiumsalze, besonders bevorzugt um Lithium- oder Calciumsalze. Als Anionen bevorzugt sind einwertige Anionen, besonders bevorzugt Halogenid, Pseudohalogenid, Formiat, Acetat und/oder Nitrat, ganz besonders bevorzugt Chlorid, Acetat und/oder Nitrat.

Die erfindungsgemäßen Rheologiesteuerungsmittel-Zusammensetzungen enthalten in einer bevorzugten Ausführungsform neben einem oder mehreren der erfindungsgemäßen Harnstoff- und/oder Urethan-substituierten Amide der Formel (I) beziehungsweise den erfindungsgemäßen oder erfindungsgemäß hergestellten Rheologiesteuerungsmitteln ein organisches Lösemittel, vorzugsweise ein polares, aprotisches organisches Lösemittel und gegebenenfalls eine oder mehrere ionogene Verbindungen. Als organische Lösemittel und ionogene Verbindungen sind insbesondere die vorgenannten, unter der Überschrift *"Lager- und Lieferformen der erfindungsgemäßen Rheologiesteuerungsmittel"* aufgeführten bevorzugt.

Vorzugsweise enthält die erfindungsgemäße Rheologiesteuerungsmittel-Zusammensetzungen, jeweils bezogen auf das Gesamtgewicht der Rheologiesteuerungsmittel-Zusammensetzung,
(i) 5 bis 70 Gew.-%, vorzugsweise 10 bis 60 Gew.-%, besonders bevorzugt 15 bis 50 Gew.-% und ganz besonders bevorzugt 15 bis 45 Gew.-% eines oder mehrerer Harnstoff- und/oder Urethansubstituierter Amide der Formel (I) oder Rheologiesteuerungsmittel erhältlich nach dem erfindungsgemäßen Verfahren,
(ii) 30 bis 95 Gew.-%, vorzugsweise 40 bis 90 Gew.-%, besonders bevorzugt 50 bis 85 Gew.-% und ganz besonders bevorzugt 55 bis 85 Gew.-% eines oder mehrerer Lösemittel, und
(iii) 0 bis 4 Gew.-% vorzugsweise 0 bis 3 Gew.-%, besonders und ganz bevorzugt 0 bis 2 Gew.-% einer oder mehrerer ionogener Verbindungen.

Besteht die vorgenannte Rheologiesteuerungsmittel-Zusammensetzung aus den vorgenannten Bestandteilen (i), (ii) und (iii), so addieren sich die prozentualen Angaben der für (i), (ii) und (iii) breitesten Bereiche beziehungsweise vorzugsweisen Bereiche beziehungsweise besonders bevorzugten Bereiche beziehungsweise ganz besonders bevorzugten Bereiche jeweils zu 100 Gew.-%. Beispielweise gilt für einen solchen Fall, dass sich 5 bis 70 Gew.-% (i), 30 bis 95 Gew.-% (ii) und 0 bis 3 Gew.-% (iii) zu 100 Gew.-% addieren bzw. dass sich 10 bis 60 Gew.-% (i), 40 bis 90 Gew.-% (ii) und 0 bis 2,5 Gew.-% (iii) zu 100 Gew.-% addieren, etc.

In allen vorgenannten und nachfolgend aufgeführten Rheologiesteuerungsmittel-Zusammensetzungen ist es bevorzugt, dass es sich beim Lösemittel um ein polares, vorzugsweise aprotisches organisches Lösemittel handelt, welches wiederum vorzugsweise gewählt wird aus der Gruppe bestehend aus N-Alkylbutyrolactamen, Dialkylsulfoxiden und Carbonsäureamiden.

In allen vorgenannten und nachfolgend aufgeführten Rheologiesteuerungsmittel-Zusammensetzungen ist es bevorzugt, dass es sich bei der ionogenen Verbindung um ein Salz handelt, welches vorzugsweise gewählt wird aus der Gruppe bestehend aus Halogeniden, Pseudohalogeniden, Formiaten, Acetaten und Nitraten, besonders bevorzugt gewählt wird aus der Gruppe der Halogenide und Nitrate.

Besonders bevorzugt enthalten die erfindungsgemäßen Rheologiesteuerungsmittel-Zusammensetzungen, jeweils bezogen auf das Gesamtgewicht der Rheologiesteuerungsmittel-Zusammensetzung,
(i) 10 bis 60 Gew.-% eines oder mehrerer Harnstoff- und/oder Urethansubstituierter Amide der Formel (I) oder Rheologiesteuerungsmittel erhältlich nach dem erfindungsgemäßen Verfahren,
(ii) 40 bis 90 Gew.-% eines oder mehrerer organischer Lösemittel, und
(iii) 0 bis 3 Gew.-% einer oder mehrerer ionogener Verbindungen.

Wenn sich vorgenannte Bestandteile (i), (ii) und (iii) zu 100 Gew.-% bezogen auf das Gesamtgewicht der Rheologiesteuerungsmittel-Zusammensetzung addieren, so besteht diese aus (i), (ii) und (iii).

Ganz besonders bevorzugt enthalten die erfindungsgemäßen Rheologiesteuerungsmittel-Zusammensetzungen, jeweils bezogen auf das Gesamtgewicht der Rheologiesteuerungsmittel-Zusammensetzung,
(i) 15 bis 50 Gew.-% eines oder mehrerer Harnstoff- und/oder Urethansubstituierter Amide der Formel (I) oder Rheologiesteuerungsmittel erhältlich nach dem erfindungsgemäßen Verfahren,
(ii) 50 bis 85 Gew.-% eines oder mehrerer organischer Lösemittel ausgewählt aus der Gruppe der polar aprotischen organischen Lösemittel,
(iii) 0 bis 2,5 Gew.-% einer oder mehrerer ionogener Verbindungen ausgewählt aus der Gruppe der Halogenide, Pseudohalogenide, Formiate, Acetate, Nitrate.

Wenn sich vorgenannte Bestandteile (i), (ii) und (iii) zu 100 Gew.-% bezogen auf das Gesamtgewicht der Rheologiesteuerungsmittel-Zusammensetzung addieren, so besteht diese aus (i), (ii) und (iii).

Äußerst bevorzugt enthalten die erfindungsgemäßen Rheologiesteuerungsmittel-Zusammensetzungen, jeweils bezogen auf das Gesamtgewicht der Rheologiesteuerungsmittel-Zusammensetzung,
(i) 15 bis 45 Gew.-% eines oder mehrerer Harnstoff- und/oder Urethansubstituierter Amide der Formel (I) oder Rheologiesteuerungsmittel erhältlich nach dem erfindungsgemäßen Verfahren,
(ii) 55 bis 85 Gew.-% eines organischen Lösemittels ausgewählt aus der Gruppe umfassend N-Alkylbutyrolactame, Dialkylsulfoxide und Carbonsäureamide,
(iii) 0 bis 2 Gew.-% einer oder mehrerer ionogener Verbindungen ausgewählt aus der Gruppe der Halogenide und Nitrate.

Wenn sich vorgenannte Bestandteile (i), (ii) und (iii) zu 100 Gew.-% bezogen auf das Gesamtgewicht der Rheologiesteuerungsmittel-Zusammensetzung addieren, so besteht diese aus (i), (ii) und (iii).

### Anwendungsgebiete der erfindungsgemäßen Rheologieadditive

Die erfindungsgemäßen Rheologiesteuerungsmittel eignen sich bevorzugt zur Rheologiesteuerung von flüssigen wässrigen oder nicht-wässrigen Systemen, insbesondere jedoch von wässrigen Systemen.

Wässrige Systeme sind solche, die als Hauptlösemittel oder sogar als einziges Lösemittel Wasser enthalten. Vorzugsweise sind wässrige Systeme solche, die weniger als 35 Gew.-%, besonders bevorzugt weniger als 25 Gew.-%, ganz besonders bevorzugt weniger als 20 Gew.-% an organischen Lösemitteln bezogen auf die Summe der Gewichtsteile an organischen Lösemitteln plus Wasser enthalten. Wässrige Systeme können neben den gegebenenfalls versalzten Spezies der Formel (I) wasserlösliche organische oder anorganische Substanzen, beispielsweise auch Salze, insbesondere die im vorangegangenen Abschnitt genannten ionogenen Verbindungen enthalten.

Die Erfindung betrifft auch die Verwendung der erfindungsgemäßen Zubereitungen zur Rheologiesteuerung einer flüssigen Zusammensetzung. Diese flüssige Zusammensetzung liegt bevorzugt als Beschichtungsmittel, insbesondere als Lack, als Kunststoffformulierung, als Pigmentpaste (z.B. Effektpigmentpaste), als Dichtstoffformulierung, als Kosmetikum, als Keramikformulierung, als Klebstoffformulierung, als flüssige Formulierungen zum Einsatz bei der Gas- und Ölförderung, als flüssige Formulierung zur Herstellung von elektrischen Bauelementen und Schaltkreisen (z.B. bei sog. "printed electronics"), als flüssige Formulierung zum Einsatz in Energiespeichermedien (z.B. Batterien), als Reinigungsmittel, als Vergussmasse, als Baustoffformulierung, als Schmierstoff, als Spachtelmasse, als Wachsemulsion, als Metallbearbeitungs-Flüssigkeit (Metal Working Fluid), in Form eines Sprühmittels (z.B. als sog. Deposition Aid in Pflanzenschutzmitteln), als Druckfarbe oder als Tinte, beispielsweise als Inkjet-Tinte, vor.

Schließlich betrifft die vorliegende Erfindung eine flüssige Zusammensetzung, die als Beschichtungsmittel, als Kunststoffformulierung, als Pigmentpaste (z.B. Effektpigmentpaste), als Dichtstoffformulierung, als Kosmetikum, als Keramikformulierung, als Klebstoffformulierung, als flüssige Formulierungen zum Einsatz bei der Gas- und Ölförderung, als flüssige Formulierung zur Herstellung von elektrischen Bauelementen und Schaltkreisen, als flüssige Formulierung zum Einsatz in Energiespeichermedien, als Reinigungsmittel, als Vergussmasse, als Baustoffformulierung, als Schmierstoff, als Spachtelmasse, als Wachsemulsion, als Metallbearbeitungs-Flüssigkeit, in Form eines Sprühmittels, als Druckfarbe oder als Tinte vorliegt und welche vorzugsweise 0,1 bis 7 Gew.-% des erfindungsgemäßen Rheologiesteuerungsmittels, bezogen auf das Gesamtgewicht der Formulierung enthält. Bevorzugt betrifft die Erfindung eine flüssige Zusammensetzung (das heißt eine Formulierung), welche 0,2 bis 5 Gew.-%, besonders bevorzugt 0,3 bis 3 Gew.-%, bezogen auf das Gesamtgewicht der flüssigen Zusammensetzung inklusive des erfindungsgemäßen Rheologiesteuerungsmittels.

Besonders bevorzugt ist hierbei die Verwendung der erfindungsgemäßen Zubereitung als Rheologiesteuerungsmittel zur Rheologiesteuerung von Lacken, Druckfarben, Tinten (wie zum Beispiel Inkjet-Tinten), Kunststoff-Formulierungen, Kosmetikzubereitungen, Reinigungsmitteln, Baustoff-Formulierungen, Metallbearbeitungsflüssigkeiten, Schmiermittel, Schmierstoffen und/oder Klebstoffen sowie bei Formulierungen, die bei der Erdgas- und Erdölförderung eingesetzt werden.

Bei den Lacken, Druckfarben und Tinten, insbesondere Inkjet-Tinten, handelt es sich vorzugsweise um wasserbasierte Lacke, Druckfarben und Tinten, insbesondere Inkjet-Tinten. Lacke sind in unterschiedlichsten Anwendungsfeldern einsetzbar, unter anderem im Bereich Automobillacke, Bautenlacke, Schutzlacke, unter anderen zur Lackierung von Schiffen und Brücken, Can- und Coil-Coating-Lacke, Holz- und Möbellacke, Industrielacke, Lacke zur Lackierung von Kunststoffen, Drahtlacke, Beschichtungsmittel zur Beschichtung von Lebensmitteln und Saatgut sowie auch als sogenannte Color Resists, welche für Farbfilter, beispielsweise in Flüssigkristall-Displays eingesetzt werden. Der Anwendungsbereich Lacke umfasst auch pastöse Materialien, welche in der Regel einen sehr hohen Anteil an Feststoffen und einen geringen Anteil von flüssigen Komponenten aufweisen, beispielsweise sogenannte Pigmentpasten oder auch Pasten auf Basis von Effektpigmenten wie beispielsweise Metalleffektpigmenten, wie zum Beispiel Aluminumpigmenten, Silberpigmenten, Messingpigmenten, Zinkpigmenten, Kupferpigmenten, Bronzepigmenten wie Goldbronzen, feuergefärbten Bronzen oder Eisenoxid-Aluminium-Pigmenten. Ebenfalls zu den Effektpigmenten zählen beispielsweise Interferenzpigmente bzw. Perlglanzpigmente wie beispielsweise Metalloxid-Glimmerpigmente, Fischsilber, Bismutoxidchlorid oder basisches Bleicarbonat. Bei den Kunststoff-Formulierungen kann es sich um (flüssige) Ausgangsmaterialien zur Herstellung von Kunststoff-Materialien handeln, die bevorzugt durch einen chemischen Vernetzungsprozess ("Härtung" zu einem Duromer) umgesetzt werden. Bevorzugte Kunststoffzubereitungen sind ungesättigte Polyesterharze, Vinylesterharze, Acrylatharze, Epoxidharze, Polyurethanharze, Formaldehydharze (wie Melamin-Formaldehyd oder Harnstoff-Formaldehyd). Diese können unter unterschiedlichsten Bedingungen ausgehärtet werden, so z.B. bei Raumtemperatur (kalthärtende Systeme) oder bei erhöhter Temperatur (heißhärtende Systeme), gegebenenfalls auch unter Aufbringung von Druck ("Closed Mold"-Applikation, Sheet Molding Compound oder Bulk Molding Compound). Zu den Kunststoff-Formulierungen zählen auch PVC-Plastisole. In einer besonderen Ausführungsform liegt das flüssige Ausgangsmaterial wasserhaltig oder in einem sehr polaren organischen Medium vor.

Bei den Kosmetikzubereitungen kann es sich um mannigfaltige, bevorzugt wasserbasierte, flüssige Kompositionen handeln, die im sogenannten Personal Care- oder auch Health Care-Bereich eingesetzt werden, so z.B. Lotionen, Cremes, Pasten wie beispielsweise Zahnpasta, Schäume wie beispielsweise Rasierschaum, Gele wie beispielsweise Rasiergel, Duschgel oder Arzneiwirkstoffe in gelförmiger Formulierung, Haarshampoo, Flüssigseifen, Nagellacke, Lippenstifte und Haarfärbemittel.

Bei den sogenannten Wachsemulsionen handelt es sich bevorzugt um Dispersionen von bei Raumtemperatur festen Wachsen in partikulärer Form in Wasser oder einem organischen Medium.

Bei den Sprühmitteln (als Deposition Aids) steht durch den Einsatz der erfindungsgemäßen Rheologiesteuerungsmittel die Abdriftminderung bzw. Abdriftvermeidung ("drift reduction"), vorzugsweise in wässrigen Sprühmitteln, im Vordergrund.

Bei den Baustoff-Formulierungen kann es sich um bei Verarbeitung flüssige oder pastöse Materialien handeln, die im Bausektor eingesetzt werden und bevorzugt wässrig sind und nach Aushärtung fest werden, so z.B. hydraulische Bindemittel wie Beton, Zement, Mörtel, Fliesenkleber und Gips.

Bei den Metallbearbeitungsflüssigkeiten kann es sich bevorzugt um wasserbasierte Systeme handeln. Beispiele hierfür stellen Schneideflüssigkeiten, Bohrflüssigkeiten (wie sie bei der Metallbearbeitung eingesetzt werden), Trennmittel (häufig in Form von wässrigen Emulsionen, beispielsweise für Aluminium-Druckguss und Gießerei-Anwendungen), Gießereischlichten ("Foundry washes" bzw. "Foundry Coatings") und Flüssigkeiten für die Oberflächenbehandlung von Metallen (beispielsweise "Surface Finishing", Oberflächenreinigung und Galvanisierung) dar.

Bei den Schmierstoffen handelt es sich um - vorzugsweise wasserbasierte - Mittel, welche zur Schmierung eingesetzt werden, das heißt, die der Verringerung von Reibung und Verschleiß, sowie der Kraftübertragung, Kühlung, Schwingungsdämpfung, Dichtwirkung und dem Korrosionsschutz dienen, wobei hier flüssige Schmierstoffe bevorzugt sind.

Bei den flüssigen Formulierungen zum Einsatz bei der Gas- und Ölförderung handelt es sich um vorzugsweise wasserbasierte Flüssigkeiten, die bei der Erschließung einer Lagerstätte oder auch bei der sich anschließenden Ausbeutung derselben zum Einsatz kommen. Bevorzugt sind hier Bohrspülmittel, auch als Bohrschlämme oder Drilling Fluids bezeichnet. Ein Anwendungsgebiet für entsprechende wässrige Formulierungen stellt beispielsweise das sog. "hydraulic fracturing" dar. Ein weiteres Anwendungsgebiet stellen ölbasierte Bohrschlämme dar.

Reinigungsmittel können der Reinigung von unterschiedlichsten Objekten dienen. Sie bewirken oder unterstützen die Entfernung von Verunreinigungen, Rückständen und Anhaftungen. Zu den Reinigungsmitteln zählen auch Waschmittel (v.a. zur Reinigung von Textilien, deren Vorprodukten und Leder), Putzmittel und Waschmittel sowie Mittel zur Körperpflege.

Bei den Klebstoffen kann es sich um alle unter Verarbeitungsbedingungen flüssigen Prozesswerkstoffe handeln, welche Fügeteile durch Flächenhaftung und innere Festigkeit verbinden können. Bevorzugt sind hier wasserbasierte Klebstoffe.

Im Folgenden wird die Erfindung durch Beispiele veranschaulicht.

### BEISPIELE

### Testmethoden

### Bestimmung des Molekulargewichts:

Das zahlenmittlere Molekulargewicht ist das Zahlenmittel der mittels Gel-Permeations-Chromatographie (GPC) bestimmten Molmassenverteilung. Die Molmassenverteilung wurde gemäß DIN 55672 Teil 1:2007-08 bestimmt. Als Eluent wurde eine Lösung von Dibutylamin (1 Vol.-%) in Tetrahydrofuran verwendet. Zur Kalibrierung wurden engverteilte, linear aufgebaute Polystyrol-Standards mit Molekulargewichten zwischen M_{P} 1000000 und M_{P} 162 g/mol analysiert.

### Bestimmung der Aminzahl:

Die Bestimmung der Aminzahl erfolgte gemäß DIN 53176:2002-11, wobei 2-Propanol als Lösemittel für die Titration verwendet wurde. Die Probe (mindestens 0,5 g) wird auf 0,1 mg genau in ein 80 ml-Becherglas eingewogen und in 50 ml 2-Propanol gelöst. Gegebenenfalls wird die Probe bis zum vollständigen Lösen leicht erwärmt. Die Probe wird auf den Magnetrührer gestellt und die Elektrode vollständig eingetaucht. Die Probe wird mit 0,1 n isopropanolischer Salzsäure titriert.

### Bestimmung der Säurezahl:

Die Bestimmung der Säurezahl erfolgte gemäß DIN EN ISO 2114:2002-06, wobei 2-Propanol als Lösemittel für die Titration verwendet wurde. Die Probe (mindestens 0,5 g) wird auf 0,1 mg genau in ein 80 ml-Becherglas eingewogen und in 50 ml 2-Propanol gelöst. Gegebenenfalls wird die Probe bis zum vollständigen Lösen leicht erwärmt. Die Probe wird auf den Magnetrührer gestellt, die Elektrode vollständig eingetaucht. Die Probe wird mit 0,1 n ethanolischer KOH titriert.

### Bestimmung der Hydroxylzahl:

Die Bestimmung der Hydroxylzahl der für die Synthese der Isocyanat-/Uretdion-Addukte eingesetzten OH-funktionellen Rohstoffe erfolgte gemäß DIN ISO 4629-1:1998-07. Die Probe (mindestens 0,5 g) wird auf 0,1 mg genau in ein 80 ml-Wägegläschen mit Schliffdeckel eingewogen und in 4,8 ml OH-Zahl-Reagenz (14.4 g p-Toluolsulfonsäure werden in 360 ml Ethylacetat gelöst und mit ca. 60 ml Essigsäureanhydrid versetzt) gelöst. Das Reagenz wird mit einer Bürette bzw. einem Dispenser zugegeben. Die Probe wird 15 min bei 50°C in einem Wasserbad oder Blockthermostat temperiert. Nach dem Abkühlen auf Raumtemperatur wird die Probe zur Zersetzung des überschüssigen Essigsäureanhydrids mit ca. 30 ml eines Pyridin-Wassergemisches (3:1) versetzt und ca. 5 min gerührt. Anschließend wird die Probe mit 0.5 n ethanolischer KOH titriert.

Die Bestimmung der Hydroxylzahl der Polyamid-Bausteine ("AM") erfolgte über eine an die DIN ISO 4629 angelehnte Methode. Die Probe (mindestens 0,5 g) wird in ein 80 ml-Wägegläschen mit Schliffdeckel genau eingewogen und in 20 ml Tetrahydrofuran gelöst. Nach Zugabe von 10,0 ml OH-Zahl-Reagenz A2 (12,5 g 4-Dimethylaminopyridin werden in ca. 500 ml Tetrahydrofuran gelöst) und 5,0 ml Reagenz B (ca. 25 ml Essigsäureanhydrid werden in ca. 500 ml Tetrahydrofuran gelöst) wird die Probe 30 min auf dem Magnetrührer gerührt. Es werden ca. 2,0 ml Wasser zugegeben und nochmals 10 min. gerührt. Anschließend wird die Probe potentiometrisch mit 0.2 n ethanolischer KOH titriert.

### Bestimmung des Isocyanat-Gehalts:

Die Bestimmung des Isocyanat-Gehalts erfolgte gemäß DIN EN ISO 9369:1997-08. Die Probe (mindestens 0,5 g) wird auf 0,1 mg genau in ein 80 ml-Becherglas eingewogen und in ca. 5 ml Chlorbenzol gelöst (ggf. unter Erwärmen). Nach Zugabe von 9,5 ml 0.2 n Dibutylaminlösung (in Chlorbenzol) wird die Probe gerührt und nach kurzer Reaktionszeit (1 min) ca. 30 ml Ethanol zugegeben. Anschließend wird das überschüssige Dibutylamin mit 0,1 n isopropanolischer Salzsäure zurücktitriert.

**Tabelle 1: Eingesetzte Rohstoffe**

| **Rohstoff-Handelsname** | **Hersteller** | **Chem. Beschreibung** |
|---|---|---|
| Pripol 1006 | Croda | Dimerfettsäure |
| Desmodur T100 | Bayer MaterialScience (Covestro) | 2,4-Toluylendiisocyanat |
| Desmodur T65 | Bayer MaterialScience (Covestro) | Mischung aus 35% 2,6-Toluylendiisocyanat und 65% 2,4-Toluylendiisocyanat |
| Desmodur T80 | Bayer MaterialScience (Covestro) | Mischung aus 20% 2,6-Toluylendiisocyanat und 80% 2,4-Toluylendiisocyanat |
| Desmodur N3400 | Bayer MaterialScience (Covestro) | aliphatisches Polyisocyanat (HDI-Uretdion) |
| DBTL | Brenntag | Dibutylzinndilaurat |
| Jeffamin ED-600 | Huntsman | Polyetherdiamin |

### Herstellung von Isocvanat-Addukten (AD) als harnstoffgruppen-und/oder urethangruppen-haltige Bausteine (A)

### Isocyanat-Addukt AD1:

Zunächst werden 90,00 g eines Monoaddukts gemäß der Patentschrift EP 1188779 aus einem Laurylalkohol und 2,4-Toluylendiisocyanat hergestellt. Das Reaktionsprodukt ist wachsartig und hat einen NCO-Gehalt von 11,1 Gew.-%.

### Isocyanat-Addukt AD2:

Zunächst werden 436,8 g eines Monoaddukts gemäß der Patentschrift EP 1188779 aus einem Polyethylenglycolmonomethylether mit einer Hydroxylzahl von 125 mg KOH/g und einem Gemisch aus 35% 2,6-Toluylendiisocyanat und 65% 2,4-Toluylendiisocyanat hergestellt.

### Isocyanat-Addukt AD3:

Es werden 125 g eines Monoaddukts gemäß der Patentschrift EP 1188779 aus Butylpolyethylenglycol mit einer Hydroxylzahl von 270 mg KOH/g und einem Gemisch aus 35% 2,6-Toluylendiisocyanat und 65% 2,4-Toluylendiisocyanat hergestellt.

### Isocyanat-Addukt AD4:

Es werden 125 g eines Monoaddukts gemäß der Patentschrift EP 1188779 aus einem mit 5 mol Ethylenoxid ethoxylierten C13-C15 Fettalkohol mit einer Hydroxylzahl von 140 mg KOH/g und einem Gemisch aus 20% 2,6-Toluylendiisocyanat und 80% 2,4-Toluylendiisocyanat hergestellt. Das hergestellte Addukt enthält 7,15 Gew.-% NCO.

### Isocyanat-Addukt AD5:

Es werden 200 g eines Monoaddukts gemäß der Patentschrift EP 1188779 aus einem Isotridecylalkohol und einem Gemisch aus 20% 2,6-Toluylendiisocyanat und 80% 2,4-Toluylendiisocyanat hergestellt. Das hergestellte Addukt enthält 10,7 Gew.-% NCO.

### Isocyanat-Addukt AD6:

Es werden 200 g eines Monoaddukts gemäß der Patentschrift EP 1188779 aus Butylpolyethylenglycol mit einer Hydroxylzahl von 270 mg KOH/g und Isophorondiisocyanat hergestellt. Das hergestellte Addukt enthält 8,10 Gew.-% NCO.

### Uretdion-Addukt AD7:

Ein Vierhalskolben wird mit Rührer, Tropftrichter, Thermometer und Rückflußkühler versehen. Es werden 71,42 g (0,14 mol) eines Polyethylenglycolmonomethylethers mit einer Hydroxylzahl von 113 mg KOH/g eingewogen und unter Stickstoffatmosphäre auf 80°C erwärmt. Anschließend werden 28,57 g (0,07 mol) Desmodur N3400 mittels eines Tropftrichters innerhalb von 10 Minuten zugegeben und die Mischung über einen Zeitraum von 10 Minuten homogenisiert. Im Anschluss werden 0,01 g DBTL zur Katalyse der Reaktion zugegeben. Nach 3 Stunden Reaktionszeit bei 80°C erhält man eine helle, viskose Flüssigkeit.

### Herstellung von Polyamiden (AM) als amidgruppenhaltige Bausteine (B)

### Polyamid AM1:

In einem Vierhalskolben mit Rührer, Kühler, Thermometer und Wasserabscheider werden 29,64 g N-Ethylpyrrolidon eingewogen und mit 0,07 mol Hexamethylendiamin (10,27 g einer 80%-igen wässrigen Lösung) und 0,035 mol Aminoethanol (2,14 g) versetzt. Die Lösung wird auf 100°C erwärmt und die Apparatur mit Stickstoff inertisiert. 0,105 mol (61,95 g) Dimerfettsäure werden bei 100°C zu dieser Lösung zudosiert. Unter Wasserabscheidung wird die Temperatur stufenweise bis auf 170°C erhöht und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 18,9 mg KOH/g.

### Polyamid AM2:

In einem Vierhalskolben mit Rührer, Kühler, Thermometer und Wasserabscheider werden 39,71 g N-Ethylpyrrolidon eingewogen und mit 0,105 mol Hexamethylendiamin (15,40 g einer 80%-igen wässrigen Lösung) und 0,035 mol Aminoethanol (2,14 g) versetzt. Die Lösung wird auf 100°C erwärmt und die Apparatur mit Stickstoff inertisiert. 0,14 mol (82,60 g) Dimerfettsäure werden bei 100°C zu dieser Lösung zudosiert. Unter Wasserabscheidung wird die Temperatur stufenweise bis auf 170°C erhöht und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 14,1 mg KOH/g.

### Polyamid AM3:

In einem Vierhalskolben mit Rührer, Kühler, Thermometer und Wasserabscheider werden 30,23 g N-Methylpyrrolidon eingewogen und mit 0,07 mol m-Xylylendiamin (9,59 g) und 0,035 mol Aminoethanol (2,14 g) versetzt. Die Lösung wird auf 100°C erwärmt und die Apparatur mit Stickstoff inertisiert. 0,105 mol (61,95 g) Dimerfettsäure werden bei 100°C zu dieser Lösung zudosiert. Unter Wasserabscheidung wird die Temperatur stufenweise bis auf 170°C erhöht und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 18,9 mg KOH/g.

### Polyamid AM4:

In einem Vierhalskolben mit Rührer, Kühler, Thermometer und Wasserabscheider werden 30,42 g N-Methylpyrrolidon eingewogen und mit 0,08 mol Jeffamin ED-600 (48,48 g), 0,08 mol Aminoethanol (4,89 g) und 0,16 mol (23,38 g) Adipinsäure versetzt. Die Apparatur wird mit Stickstoff inertisiert und die Mischung unter Wasserabscheidung stufenweise bis auf 170°C erhitzt und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 45,9 mg KOH/g.

### Polyamid AM5:

In einem Vierhalskolben mit Rührer, Kühler, Thermometer und Wasserabscheider werden 29,85 g N-Methylpyrrolidon eingewogen und mit 0,07 mol Hexamethylendiamin (10,27 g einer 80%-igen wässrigen Lösung) und 0,035 mol 1-Amino-2-propanol (2,63 g) versetzt. Die Lösung wird auf 100°C erwärmt und die Apparatur mit Stickstoff inertisiert. 0,105 mol (61,95 g) Dimerfettsäure werden bei 100°C zu dieser Lösung zudosiert. Unter Wasserabscheidung wird die Temperatur stufenweise bis auf 170°C erhöht und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 21,4 mg KOH/g.

### Polyamid AM6:

In einem Vierhalskolben mit Rührer, Kühler, Thermometer und Wasserabscheider werden 24,65 g N-Octylpyrrolidon eingewogen und mit 0,15 mol Hexamethylendiamin (22,01 g einer 80%-igen wässrigen Lösung) und 0,05 mol Aminoethanol (3,06 g) versetzt. Die Lösung wird auf 100°C erwärmt und die Apparatur mit Stickstoff inertisiert. 0,2 mol (40,45 g) Decandisäure werden bei 100°C portionsweise zu dieser Lösung zugegeben. Unter Wasserabscheidung wird die Temperatur stufenweise bis auf 190°C erhöht und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 34,0 mg KOH/g.

### Polyamid AM7:

In einem Vierhalskolben mit Rührer, Kühler, Thermometer und Wasserabscheider werden 29,85 g N-Octylpyrrolidon eingewogen und mit 0,07 mol Hexamethylendiamin (10,27 g einer 80%-igen wässrigen Lösung) und 0,035 mol 1-Amino-2-propanol (2,63 g) versetzt. Die Lösung wird auf 100°C erwärmt und die Apparatur mit Stickstoff inertisiert. 0,105 mol (61,95 g) Dimerfettsäure werden bei 100°C zu dieser Lösung zudosiert. Unter Wasserabscheidung wird die Temperatur stufenweise bis auf 170°C erhöht und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 19,6 mg KOH/g.

### Polyamid AM8:

In einem Vierhalskolben mit Rührer, Kühler, Thermometer und Wasserabscheider werden 30,23 g N-Octylpyrrolidon eingewogen und mit 0,07 mol m-Xylylendiamin (9,59 g) und 0,035 mol Aminoethanol (2,14 g) versetzt. Die Lösung wird auf 100°C erwärmt und die Apparatur mit Stickstoff inertisiert. 0,105 mol (61,95 g) Dimerfettsäure werden bei 100°C zu dieser Lösung zudosiert. Unter Wasserabscheidung wird die Temperatur stufenweise bis auf 170°C erhöht und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 17,1 mg KOH/g.

### Polyamid AM9:

In einem Vierhalskolben mit Rührer, Kühler, Thermometer und Wasserabscheider werden 30,42 g N-Octylpyrrolidon eingewogen und mit 0,08 mol Jeffamin ED-600 (48,48 g), 0,08 mol Aminoethanol (4,89 g) und 0,16 mol (23,38 g) Adipinsäure versetzt. Die Apparatur wird mit Stickstoff inertisiert und die Mischung unter Wasserabscheidung stufenweise bis auf 170°C erhitzt und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 39,9 mg KOH/g.

### Polyamid AM10:

In einem Vierhalskolben mit Rührer, Kühler, Thermometer und Wasserabscheider werden 29,64 g N-Methylpyrrolidon eingewogen und mit 0,07 mol Hexamethylendiamin (10,27 g einer 80%-igen wässrigen Lösung) und 0,035 mol Aminoethanol (2,14 g) versetzt. Die Lösung wird auf 100°C erwärmt und die Apparatur mit Stickstoff inertisiert. 0,105 mol (61,95 g) Dimerfettsäure werden bei 100°C zu dieser Lösung zudosiert. Unter Wasserabscheidung wird die Temperatur stufenweise bis auf 170°C erhöht und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 18,9 mg KOH/g.

### Polyamid AM11:

In einem Vierhalskolben mit Rührer, Kühler, Thermometer und Wasserabscheider werden 33,9 g N-Ethylpyrrolidon eingewogen und mit 0,08 mol Butandiamin (7,05 g) und 0,04 mol Tris(hydroxymethyl)-aminomethan (4,84 g) versetzt. Die Lösung wird auf 100°C erwärmt und die Apparatur mit Stickstoff inertisiert. Im Anschluss werden 0,12 mol (70,8 g) Dimerfettsäure bei 100°C zu dieser Lösung zudosiert. Unter Wasserabscheidung wird die Temperatur stufenweise bis auf 170°C erhöht und bei dieser Temperatur so lange gehalten, bis kein weiteres Reaktionswasser überdestilliert. Die Reaktionskontrolle erfolgt über eine Bestimmung der Aminzahl des hergestellten Produkts. Die Hydroxylzahl beträgt 46,7 mg KOH/g.

### Polyamid AM12:

In einem Vierhalskolben mit Rührer, Kühler, Thermometer und Wasserabscheider werden 167,48 g N-Ethylpyrrolidon eingewogen und mit 0,26 mol Hexamethylendiamin (37,75 g einer 80%-igen wässrigen Lösung) versetzt. Die Lösung wird auf 100°C erwärmt und die Apparatur mit Stickstoff inertisiert. Im Anschluss werden 0,24 mol (141,6 g) Dimerfettsäure bei 100°C zu dieser Lösung zudosiert. Unter Wasserabscheidung wird die Temperatur stufenweise bis auf 160°C erhöht und die Reaktion bei Erreichen einer Aminzahl von 18,2 mg KOH/g abgebrochen. Die Säurezahl des hergestellten Produkts beträgt 18,2 mg KOH/g.

### Polyamid AM13:

Die Herstellung des Polyamids aus 0,132 mol Hexamethylendiamin (19,17 g einer 80%-igen wässrigen Lösung) und 0,12 mol (70,8 g) Dimerfettsäure erfolgte gemäß der Patentschrift DE 10 2006 010 721 A1. Die Aminzahl des Produkts beträgt 18,2 mg KOH/g, die Säurezahl beträgt 15,2 mg KOH/g.

### Herstellung der erfindungsgemäßen Rheologiesteuerungsmittel

### Beispiel B1:

In einem Vierhalskolben mit Rührer, Kühler und Thermometer werden 64,68 g N-Methylpyrrolidon und 29,7 g der hergestellten Polyamid-Lösung AM10 (entspricht 20,79 g (0,01 mol) Polyamid) auf 40°C erwärmt und die Apparatur mit Stickstoff inertisiert. Unter Rühren werden 3,74 g (0,01 mol) des auf ca. 50°C erwärmten, synthetisierten Isocyanaturethans AD1 mit einer Pipette zudosiert. Die Temperatur wird auf 60°C erhöht und für 2,5 Stunden gehalten. Das erhaltene Produkt ist bernsteinfarben und hochviskos.

### Beispiel B2:

In einem Vierhalskolben mit Rührer, Kühler, Tropftrichter und Thermometer werden 996,3 g N-Ethylpyrrolidon und 450,0 g der hergestellten Polyamid-Lösung AM1 (entspricht 315 g (0,15 mol) Polyamid) auf 40°C erwärmt und die Apparatur mit Stickstoff inertisiert. Unter Rühren werden 61,21 g (0,15 mol) des synthetisierten Isocyanaturethans AD3 mit Hilfe des Tropftrichters in einem Zeitraum von 20 Minuten zugegeben. Die Temperatur wird auf 60°C erhöht und für 2,5 Stunden gehalten. Das erhaltene Produkt ist bernsteinfarben und hochviskos (das mittels Gel-Permeations-Chromatographie bestimmte Zahlenmittel Mₙ beträgt 2387 g/mol).

### Beispiel B3:

In einem Vierhalskolben mit Rührer, Kühler und Thermometer werden 71,46 g N-Ethylpyrrolidon und 29,70 g der hergestellten Polyamid-Lösung AM1 (entspricht 20,79 g (0,01 mol) Polyamid) auf 40°C erwärmt und die Apparatur mit Stickstoff inertisiert. Unter Rühren werden 6,00 g (0,01 mol) des synthetisierten Isocyanaturethans AD2 mit Hilfe einer Pipette in einem Zeitraum von 5 Minuten zudosiert. Die Temperatur wird auf 60°C erhöht und für 3 Stunden gehalten. Das erhaltene Produkt ist bernsteinfarben und hochviskos (das mittels Gel-Permeations-Chromatographie bestimmte Zahlenmittel Mₙ beträgt 2340 g/mol).

### Beispiel B4:

In einem Vierhalskolben mit Rührer, Kühler und Thermometer werden 65,25 g N-Ethylpyrrolidon und 29,70 g der hergestellten Polyamid-Lösung AM1 (entspricht 20,79 g (0,01 mol) Polyamid) auf 40°C erwärmt und die Apparatur mit Stickstoff inertisiert. Unter Rühren werden 3,93 g (0,01 mol) des synthetisierten Isocyanaturethans AD5 mit einer Pipette zugegeben. Die Temperatur wird auf 60°C erhöht und für 2,5 Stunden gehalten. Das erhaltene Produkt ist bernsteinfarben und hochviskos (das mittels Gel-Permeations-Chromatographie bestimmte Zahlenmittel Mₙ beträgt 2390 g/mol).

### Beispiel B5:

In einem Vierhalskolben mit Rührer, Kühler und Thermometer werden 64,68 g N-Methylpyrrolidon und 29,7 g der hergestellten Polyamid-Lösung AM3 (entspricht 20,79 g (0,01 mol) Polyamid) auf 40°C erwärmt und die Apparatur mit Stickstoff inertisiert. Unter Rühren werden 3,74 g (0,01 mol) des auf ca. 50°C erwärmten, synthetisierten Isocyanaturethans AD1 mit einer Pipette in einem Zeitraum von 5 Minuten zudosiert. Die Temperatur wird auf 60°C erhöht und für 2,5 Stunden gehalten. Das erhaltene Produkt ist bernsteinfarben und hochviskos (das mittels Gel-Permeations-Chromatographie bestimmte Zahlenmittel Mₙ beträgt 2230 g/mol).

### Beispiel B6:

In einem Vierhalskolben mit Rührer, Kühler und Thermometer werden 64,88 g N-Methylpyrrolidon und 26,2 g der hergestellten Polyamid-Lösung AM5 (entspricht 18,34 g (0,01 mol) Polyamid) auf 40°C erwärmt und die Apparatur mit Stickstoff inertisiert. Unter Rühren werden 5,90 g (0,01 mol) des synthetisierten Isocyanaturethans AD4 mit einer Pipette in einem Zeitraum von 5 Minuten zudosiert. Die Temperatur wird auf 60°C erhöht und für 2,5 Stunden gehalten. Das erhaltene Produkt ist bernsteinfarben und hochviskos (das mittels Gel-Permeations-Chromatographie bestimmte Zahlenmittel Mₙ beträgt 2265 g/mol).

### Beispiel B7:

In einem Vierhalskolben mit Rührer, Kühler und Thermometer werden 62,72 g N-Methylpyrrolidon, 26,21 g der hergestellten Polyamid-Lösung AM10 (entspricht 18,35 g (0,01 mol) Polyamid) und 5,18 g (0,01 mol) des synthetisierten Isocyanaturethans AD6 eingewogen und die Apparatur mit Stickstoff inertisiert. Unter Rühren wird das Gemisch auf 60°C erwärmt und dieser Temperaturbereich für 3 Stunden gehalten. Das erhaltene Produkt ist bernsteinfarben und hochviskos (das mittels Gel-Permeations-Chromatographie bestimmte Zahlenmittel Mₙ beträgt 2301 g/mol).

### Beispiel B8:

In einem Vierhalskolben mit Rührer, Kühler und Thermometer werden 69,82 g N-Methylpyrrolidon und 25,32 g der hergestellten Polyamid-Lösung AM4 (entspricht 17,72 g (0,02 mol) Polyamid) auf 40°C erwärmt, unter Stickstoff gesetzt und mit 5,0 g eines handelsüblichen Zeolithes versetzt, um das im Amid enthaltene, restliche Reaktionswasser zu entfernen. Hierbei wird die Mischung trüb. Unter Rühren werden 8,08 g (0,02 mol) des synthetisierten Isocyanaturethans AD3 mit einer Pipette in einem Zeitraum von 5 Minuten zudosiert. Die Temperatur wird auf 60°C erhöht und für 3 Stunden gehalten. Das erhaltene Produkt ist bernsteinfarben und hochviskos (das mittels Gel-Permeations-Chromatographie bestimmte Zahlenmittel Mₙ beträgt 1481 g/mol).

### Beispiel B9:

In einem Vierhalskolben mit Rührer, Kühler und Thermometer werden 47,7 g N-Octylpyrrolidon und 16,5 g der hergestellten Polyamid-Lösung AM6 (entspricht 11,55 g (0,01 mol) Polyamid) eingewogen, die Apparatur mit Stickstoff inertisiert und die Mischung auf 180°C erwärmt, so dass eine homogene Lösung entsteht. Unter Rühren werden 6,0 g (0,01 mol) des synthetisierten Isocyanaturethans AD2 mit einer Pipette in einem Zeitraum von 5 Minuten zudosiert. Die Temperatur wird für 2,5 Stunden gehalten. Das erhaltene Reaktionsprodukt ist hochviskos und dunkelbraun.

### Beispiel B10:

In einem Vierhalskolben mit Rührer, Kühler und Thermometer werden 80,02 g N-Ethylpyrrolidon und 39,54 g der hergestellten Polyamid-Lösung AM2 (entspricht 27,68 g (0,01 mol) Polyamid) auf 40°C erwärmt und die Apparatur mit Stickstoff inertisiert. Unter Rühren werden 2,95 g (0,01 mol) des auf ca. 45°C erwärmten Stearylisocyanats mit einer Pipette in einem Zeitraum von 5 Minuten zudosiert. Es werden 100 ppm DBTL zur Katalyse der Reaktion zugegeben. Die Temperatur wird auf 100°C erhöht und für 3 Stunden gehalten. Das erhaltene Produkt ist gelblich, hochviskos und leicht trüb.

### Beispiel B11:

In einem Vierhalskolben mit Rührer, Kühler und Thermometer werden 30,21 g N-Octylpyrrolidon, 40,05 g N-Formylmorpholin und 32,8 g der hergestellten Polyamid-Lösung AM8 (entspricht 22,96 g (0,01 mol) Polyamid) auf 40°C erwärmt und die Apparatur mit Stickstoff inertisiert. Unter Rühren werden 3,74 g (0,01 mol) des auf ca. 50°C erwärmten, synthetisierten Isocyanaturethans AD1 mit einer Pipette in einem Zeitraum von 5 Minuten zudosiert. Die Temperatur wird auf 60°C erhöht und für 2,5 Stunden gehalten. Das erhaltene Produkt ist gelblich und flüssig (das mittels Gel-Permeations-Chromatographie bestimmte Zahlenmittel Mₙ beträgt 2521 g/mol).

### Beispiel B12:

In einem Vierhalskolben mit Rührer, Kühler und Thermometer werden 30,3 g N-Octylpyrrolidon, 38,88 g N-Formylmorpholin und 28,6 g der hergestellten Polyamid-Lösung AM7 (entspricht 20,02 g (0,01 mol) Polyamid) auf 40°C erwärmt und die Apparatur mit Stickstoff inertisiert. Unter Rühren werden 5,9 g (0,01 mol) des synthetisierten Isocyanaturethans AD4 mit einer Pipette in einem Zeitraum von 5 Minuten zudosiert. Die Temperatur wird auf 60°C erhöht und für 3 Stunden gehalten. Das erhaltene Produkt ist bernsteinfarben und hochviskos (das mittels Gel-Permeations-Chromatographie bestimmte Zahlenmittel Mₙ beträgt 2486 g/mol).

### Beispiel B13:

In einem Vierhalskolben mit Rührer, Kühler und Thermometer werden 33,21 g N-Octylpyrrolidon, 41,65 g N-Formylmorpholin und 28,12 g der hergestellten Polyamid-Lösung AM9 (entspricht 19,68 g (0,02 mol) Polyamid) auf 40°C erwärmt und die Apparatur mit Stickstoff inertisiert. Unter Rühren werden 8,08 g (0,02 mol) des synthetisierten Isocyanaturethans AD3 mit einer Pipette in einem Zeiraum von 5 Minuten zudosiert. Die Temperatur wird auf 60°C erhöht und für 3 Stunden gehalten. Das erhaltene Produkt ist bernsteinfarben und flüssig (das mittels Gel-Permeations-Chromatographie bestimmte Zahlenmittel Mₙ beträgt 1603 g/mol).

### Beispiel B14:

In einem Vierhalskolben mit Rührer, Kühler und Thermometer werden 646,8 g N-Ethylpyrrolidon und 297,0 g der hergestellten Polyamid-Lösung AM1 (entspricht 207,9 g (0,1 mol) Polyamid) auf 40°C erwärmt und die Apparatur mit Stickstoff inertisiert. Unter Rühren werden 37,4 g (0,1 mol) des auf ca. 50°C erwärmten, synthetisierten Isocyanaturethans AD1 mit einer Pipette zudosiert. Die Temperatur wird auf 60°C erhöht und für 2,5 Stunden gehalten. Das erhaltene Produkt ist bernsteinfarben und hochviskos (das mittels Gel-Permeations-Chromatographie bestimmte Zahlenmittel Mₙ beträgt 2468 g/mol).

### Beispiel B15:

In einem Vierhalskolben mit Rührer, Kühler und Thermometer werden 64,68 g N-Ethylpyrrolidon und 3,74 g (0,01 mol) des synthetisierten Isocyanaturethans AD1 bei einer Temperatur von 40°C vorgelegt und die Apparatur mit Stickstoff inertisiert. Unter Rühren werden 29,7 g der auf ca. 60°C erwärmten, hergestellten Polyamid-Lösung AM1 (entspricht 20,79 g (0,01 mol) Polyamid) mittels Tropftrichter zudosiert. Die Temperatur wird auf 60°C erhöht und für 3 Stunden gehalten. Das erhaltene Produkt ist bernsteinfarben und flüssig (das mittels Gel-Permeations-Chromatographie bestimmte Zahlenmittel Mₙ beträgt 2190 g/mol).

### Beispiel B16:

In einem Vierhalskolben mit Rührer, Kühler und Thermometer werden 646,8 g N-Ethylpyrrolidon und 297,0 g der hergestellten Polyamid-Lösung AM1 (entspricht 207,9 g (0,1 mol) Polyamid) auf 40°C erwärmt und die Apparatur mit Stickstoff inertisiert. Unter Rühren werden 37,4 g (0,01 mol) des auf ca. 50°C erwärmten, synthetisierten Isocyanaturethans AD1 mit einer Pipette zudosiert. Die Temperatur wird auf 60°C erhöht und für 2,5 Stunden gehalten. Im Anschluss wird das Reaktionsgemisch mit 0,5 Gew.-% Lithiumchlorid versetzt und über einen Zeitraum von einer Stunde bei 80 °C homogenisiert. Das erhaltene Produkt ist bernsteinfarben und flüssig.

### Beispiel B17:

In einem Vierhalskolben mit Rührer, Kühler und Thermometer werden 72,46 g N-Ethylpyrrolidon und 30,82 g der hergestellten Polyamid-Lösung AM12 (entspricht 15,41 g (0,01 mol) Polyamid) auf 40°C erwärmt und die Apparatur mit Stickstoff inertisiert. Unter Rühren werden 13,88 g (0,01 mol) des auf ca. 50°C erwärmten, synthetisierten Uretdionurethans AD7 mit einer Pipette in einem Zeitraum von 5 Minuten zudosiert. Die Temperatur wird auf 80°C erhöht und für 3 Stunden gehalten. Man erhält ein gelbes, viskoses Produkt (das mittels Gel-Permeations-Chromatographie bestimmte Zahlenmittel Mₙ beträgt 3709 g/mol).

### Beispiel B18:

In einem Vierhalskolben mit Rührer, Kühler und Thermometer werden 66,41 g N-Ethylpyrrolidon und 28,84 g der hergestellten Polyamid-Lösung AM11 (entspricht 20,19 g (0,008 mol) Polyamid) auf 40°C erwärmt und die Apparatur mit Stickstoff inertisiert. Unter Rühren werden 4,83 g (0,008 mol) des synthetisierten Isocyanaturethans AD2 mit einer Pipette in einem Zeitraum von 5 Minuten zudosiert. Die Temperatur wird auf 60°C erhöht und für 2 Stunden gehalten. Das erhaltene Produkt ist bernsteinfarben und viskos (das mittels Gel-Permeations-Chromatographie bestimmte Zahlenmittel Mₙ beträgt 2839 g/mol).

### Beispiel B19:

In einem Vierhalskolben mit Rührer, Kühler und Thermometer werden 65,72 g N-Ethylpyrrolidon und 23,43 g der hergestellten Polyamid-Lösung AM11 (entspricht 16,40 g (0,0065 mol) Polyamid) auf 40°C erwärmt und die Apparatur mit Stickstoff inertisiert. Unter Rühren werden 7,85 g (0,013 mol) des synthetisierten Isocyanaturethans AD2 mit einer Pipette in einem Zeitraum von 5 Minuten zudosiert. Die Temperatur wird auf 60°C erhöht und für 2 Stunden gehalten. Das erhaltene Produkt ist bernsteinfarben und viskos.

### Beispiel B20:

In einem Vierhalskolben mit Rührer, Kühler und Thermometer werden 67,52 g N-Ethylpyrrolidon und 20,4 g der hergestellten Polyamid-Lösung AM11 (entspricht 14,28 g (0,0056 mol) Polyamid) auf 40°C erwärmt und die Apparatur mit Stickstoff inertisiert. Unter Rühren werden 10,27 g (0,017 mol) des synthetisierten Isocyanaturethans AD2 mit einer Pipette in einem Zeitraum von 5 Minuten zudosiert. Die Temperatur wird auf 60°C erhöht und für 2 Stunden gehalten. Das erhaltene Produkt ist bernsteinfarben und viskos.

### Beispiel B21:

Die Herstellung des Produkts aus 37,0 g der zuvor hergestellten Polyamid-Lösung AM13 (entspricht 25,9 g (0,012 mol) Polyamid) und 8,00 g (0,012 mol) des in Patent DE 10 2006 010 721 A1 unter Beispiel 1 beschriebenen, synthetisierten Uretdionurethans erfolgt gemäß der Patentschrift DE 10 2006 010 721 A1. Man erhält ein trübes, viskoses Produkt (das mittels Gel-Permeations-Chromatographie bestimmte Zahlenmittel Mₙ beträgt 3924 g/mol).

**Tabelle 2: Vergleichsbeispiele nach dem Stand der Technik**

| **Vergleichs-Beispiel** | **Name** | **Wirksubstanz in %** | **Hersteller** | **Beschreibung** |
|---|---|---|---|---|
| **VB1** | Rheovis AS 1130 | 30,0 | BASF | Acrylat-Copolymer, Emulsion in Wasser |
| **VB2** | Rheovis PU 1214 | 40,0 | BASF | Nichtionischer Polyurethanbasierender Assoziativverdicker |
| **VB3** | Disparlon AQ-610 | 15,0 | Kusumoto | Polyamid-basiertes Rheologieadditiv |
| **VB4** | Disparlon AQ-870 | 15,0 | Kusumoto | flüssiges Polyamid-basiertes Rheologieadditiv |
| **VB5** | Acrysol RM 2020 | 20,0 | Dow | Nichtionischer Urethanbasierter Rheologiemodifizierer |
| **VB6** | Acrysol RM 895 | 23,5 | Dow | LM-freier HEUR-Rheologiemodifizierer |
| **VB7** | BYK-7420 ES | 40,0 | BYK-Chemie | Lösung eines modifizierten Harnstoffs |
| **VB8** | Acrysol RM 8w | 21,5 | Dow | Nichtionischer Urethanbasierter Rheologiemodifizierer |
| **VB9** | Borchigel LW44 | 47,0 | Borchers | Nichtionogenes Verdickungsmittel auf Polyurethanbasis |
| **VB10** | Beispiel 20 aus Patent DE 10 2006 010 721 A1 | 30 | ./. | ./. |

### Anwendungstechnische Prüfung der Rheologiesteuerungsmittel

**Tabelle 3: Eingesetzte Rohstoffe**

| **Name** | **Beschreibung** | **Hersteller** |
|---|---|---|
| Daotan VTW 6462 | Urethan Acrylat Hybrid Dispersion | Allnex S.ä r.l. |
| Isobutanol | | Overlack AG |
| BYK-011 | Entschäumer | BYK-Chemie GmbH |
| BYK-347 | Verlaufsadditiv | BYK-Chemie GmbH |
| DMEA | Dimethylaminoethanol | Air Products and Chemicals Inc. |
| STAPA IL Hydrolan 2154 | Aluminium Effektpigment | Eckart GmbH |
| Butylglykol | Ethylenglycolmonobutylether | Overlack AG |
| Disperbyk-180 | Netz- und Dispergieradditiv | BYK-Chemie GmbH |
| Bayhydrol A145 | Polyacrylat -Dispersion | Covestro AG |
| Disperbyk-194 | Netz- und Dispergieradditiv | BYK-Chemie GmbH |
| Tronox RKB-4 | Titandioxid Pigment | Tronox Pigments |
| BYK-345 | Verlaufsadditiv | BYK-Chemie GmbH |
| BYK-333 | Verlaufsadditiv | BYK-Chemie GmbH |
| Bayhydur 304 | Polyisocyanat | Covestro AG |
| Dowanol PMA | 1,2-Propandiolmonoacetat-Monomethylether | Dow Chemical Company |
| Bayferrox 3920 | Eisenoxidgelb Pigment | Lanxess GmbH |
| BYK-1730 | Entschäumer | BYK-Chemie GmbH |
| Acticide MBS | Mikrobiozid und Algizid | Thor GmbH |
| Klarlack HS Racing Clear VOC 923-135 | 2-Komponenten Klarlack | BASF Coatings GmbH (Glasurit) |
| Neocryl XK-205 | Acrylat Styrol Copolymer | DSM Neoresins |
| AMP-90 | 2-Amino-2-methyl-1-propanol | Dow Chemical Company |
| BYK-024 | Entschäumer | BYK-Chemie GmbH |
| BYK-346 | Verlaufsadditiv | BYK-Chemie GmbH |

### Prüfsystem 1: Effektpigmentorientierung eines Aluminium-Basislacks

Die Herstellung der Effektpigment-Slurries erfolgt nach der in Tabelle 4 angegebenen Formulierung. Anschließend erfolgt die Herstellung des Basislackes nach der in Tabelle 5 angegebenen Formulierung. Danach werden jeweils 200 g des Basislacks in einen 350 ml-PE-Becher eingewogen und das jeweilige Rheologieadditiv unter Rühren mit dem Dispermat LV (Fa. Getzmann) eingearbeitet (5 min., 800 U/min., 5 cm Flügelrührer). Die Rheologieadditive werden mit einer Dosierung von 1,5 % Wirksubstanz eingesetzt, um eine Mindestviskosität von 600 mPas für die Lackierung zu erzielen. Wird die Mindestviskosität nicht erreicht, wird die Dosierung des jeweiligen Additives entsprechend der Dosierungsempfehlung im technischen Datenblatt erhöht. Die Basislacke werden anschließend über Nacht bei RT gelagert und dann mit dem Brookfield-Viskosimeter LV DV-I (Fa. Brookfield, Spindel 3 bei 50 U/min.) durch Zugabe von VE-Wasser auf eine Spritzviskosität von 600-800 mPas eingestellt. Die Applikation des Basislackes erfolgt mittels Applikationsautomat APL 2.71 Automat mit einer HVLP Spritzpistole, 1.3 mm-Düse (Fa. Oerter & Köhne GmbH & Co. KG) auf DIN A4-Aluminiumblechen (Typ: Aluminiumbleche geprimert, 1-seitig hellgrau - 285 mm x 205 mm - Ecken gerundet, Hersteller: Novelis Deutschland GmbH). Nach einer Trocknungszeit von 30 min. bei Raumtemperatur wird auf den Basislack ein Klarlack (2-Komponenten-PU-Klarlack HS Racing Clear VOC 923-135, Fa. BASF Coatings) mittels pneumatischer Spritzapplikation (Spritzpistole: Sata Jet 4000 RP, 1.3mm Düse, Fa. SATA GmbH & Co. KG) von Hand aufgetragen. Die Trocknung des Klarlackes erfolgt bei RT über Nacht und anschließend forciert 20 min. bei 80°C im Lacktrockenschrank (Typ FDL 115, Fa. Binder). Die Bewertung der Orientierung der Aluminiumpigmente durch Messung des Flop-Wertes wurde mit dem BYK-mac i der Fa. BYK-Gardner durchgeführt. Je höher der Flop-Wert, desto gleichmäßiger ist das Aluminiumpigment im Basislack orientiert und desto besser ist das jeweilige Rheologieadditiv zur Orientierung von Effektpigmenten geeignet.

**Tabelle 4: Effektpigment-Slurry**

| | |
|---|---|
| Butylglykol | 47,9 g |
| DISPERBYK-180 | 1,5 g |

| Dispermat LV, 10 min., 800 U/min., 5 cm Flügelrührer | |
|---|---|
| Hydrolan IL 2154 | 50,6 g |
| Gesamt | 100,0 g |

**Tabelle 5: Effektpigment-Basislack**

| | |
|---|---|
| Daotan VTW 6462 | 47,6 g |
| VE Wasser | 14,6 g |
| Isobutanol | 2,3 g |
| BYK-011 | 0,1 g |
| BYK-347 | 0,3 g |
| DMEA (10% in Wasser) | 1,7 g |
| Effektpigment Slurry | 13,8 g |
| VE-Wasser | 19,6 g |
| Gesamt | 100,0 g |
| Zugabe der Einzelkomponenten unter Rühren, nach Zugabe der letzten Komponente 10 min. weiterrühren, Dispermat LV, 5 cm Flügelrührer, 800 U/min. | |

**Tabelle 6: Dosierung und Ergebnisse**

| **Produkt** | **Dosierung der Wirksubstanz [%]** | **Spritzviskosität 600m - 800 mPas** | **Flop-Wert** |
|---|---|---|---|
| **Nullprobe** | - | | * |
| **VB1** | 1,8 | 790 | 12,9 |
| **VB6** | 4 | 210 ** | 12,7 |
| **VB4** | 0,8 (max.Dosierung) | 140 ** | s.u. ** |
| **VB7** | 2 | 480 ** | s.u. ** |
| **B3** | 1,5 | 605 | 17,1 |
| **B4** | 1,5 | 660 | 14,9 |
| **B2** | 1,5 | 750 | 13,4 |
| **B14** | 1,5 | 700 | 13,5 |
| **B10** | 1,8 | 765 | 14,5 |
| **B12** | 1,5 | 730 | 20,9 |
| **B17** | 1,5 | 600 | 17,1 |
| **B18** | 1,5 | 710 | 19,9 |
| **B19** | 1,5 | 691 | 15,9 |
| **B20** | 1,5 | 595 | 14,9 |

| | | | |
|---|---|---|---|
| *) eine Nullprobe ohne Rheologieadditiv konnte aufgrund einer viel zu geringen Viskosität nicht lackiert werden. **) trotz Verwendung der im technischen Datenblatt angegebenen maximalen Dosierung wurde eine zu niedrige Applikationsviskosität erreicht, der Flop war daher nicht messbar | | | |

Aus der Tabelle 6 ist erkennbar, dass die Vergleichsbeispiele **VB4, VB6** und **VB7** trotz einer teilweise höheren Einsatzmenge die erforderliche Mindestviskosität für die Spritzapplikation nicht erzielen bzw. diese Viskosität auch durch eine Erhöhung der Dosierung gemäß Datenblatt nicht erreicht werden kann.

Die Lackierergebnisse der Vergleichsbeispiele **VB4** und **VB7** sind so schlecht, dass eine Messung des Flop-Wertes nicht möglich ist. Die Dosierung des Vergleichsbeispiels **VB4** erfolgte mit der maximalen Dosierung gemäß technischem Datenblatt.
Alle erfindungsgemäßen Beispiele können auf den erforderlichen Viskositätsbereich für die Lackierung eingestellt werden und erzielen höhere Flop-Werte als die Vergleichsbeispiele **VB1** und **VB6.** Die erfindungsgemäßen Beispiele sind somit besser geeignet, um die Effektpigmentorientierung von Basislacken zu verbessern als die Vergleichsbeispiele.

### Prüfsystem 2: Lagerstabilität eines Effektpigment-Basislacks

Die Herstellung des Effektpigment-Slurries und des Basislackes erfolgt nach den in den Tabellen 7 und 8 angegebenen Formulierung. Danach werden jeweils 100 g des Basislackes in einen 350 ml-PE-Becher eingewogen und das jeweilige Rheologieadditiv unter Rühren mit dem Dispermat LV, Fa Getzmann eingearbeitet (5 min., 800 U/min., 5 cm-Flügelrührer).

Die Rheologieadditive werden mit einer Dosierung von 1,5% Wirksubstanz eingesetzt um eine Mindestviskosität von 600 mPas (Spindel 3 bei 50 U/min., Brookfield Viskosimeter LV DV-I, Fa. Brookfield) für die Lackierung zu erzielen. Wird die Mindestviskosität nicht erreicht, wird die Dosierung des jeweiligen Additives entsprechend der Dosierungsempfehlung im technischen Datenblatt erhöht. Die Basislacke werden anschließend über Nacht bei RT gelagert und dann mit dem Brookfield-Viskosimeter LV DV-I, Fa. Brookfield (Spindel 3 bei 50 U/min.) durch Zugabe von VE-Wasser auf eine Spritzviskosität von 600-800 mPas eingestellt. Der Basislack wird in 100 ml-Glasflaschen abgefüllt und bei RT für 4 Wochen gelagert. Die Beurteilung der Lagerstabilität des Effektpigment- Basislackes erfolgt durch Messung der Synäresebildung in Prozent im Vergleich zum Gesamtvolumen. Je geringer der Wert für die Synärese ist, desto besser ist die Lagerstabilität des Lackes und somit die rheologische Wirksamkeit des jeweiligen Rheologieadditives.

**Tabelle 7: Effektpigment-Slurry**

| | |
|---|---|
| Butylglykol | 47,9 g |
| DISPERBYK-180 | 1,5 g |

| Dispermat LV, 10 min., 800 U/min., 5 cm-Flügelrührer | |
|---|---|
| Hydrolan IL 2154 | 50,6 g |
| Gesamt | 100,0 g |

**Tabelle 8: Effektpigment-Basislack**

| | |
|---|---|
| Daotan VTW 6462 | 47,6 g |
| VE Wasser | 14,6 g |
| Isobutanol | 2,3 g |
| BYK-011 | 0,1 g |
| BYK-347 | 0,3 g |
| DMEA (10% in Wasser) | 1,7 g |
| Effektpigment Slurry | 13,8 g |
| VE-Wasser | 19,6 g |
| Gesamt | 100,0 g |
| Zugabe der Einzelkomponenten unter Rühren, nach Zugabe der letzten Komponente 10min. weiterrühren, Dispermat LV, 5 cm-Flügelrührer, 800 U/min. | |

**Tabelle 9: Ergebnisse**

| **Produkt** | **Dosierung Wirksubstanz [%]** | **Synärese [%]** |
|---|---|---|
| **Nullprobe** | - | 90 |
| **VB4** | 0,8 ** | 38 |
| **VB6** | 4* | 85 |
| **B1** | 2,4* | 19 |
| **B2** | 1,5 | 28 |
| **B3** | 1,5 | 0 |
| **B4** | 1,5 | 24 |
| **B7** | 2,3* | 16 |
| **B10** | 1,8* | 0 |

| | | |
|---|---|---|
| *): die Dosierung musste erhöht werden, um die geforderte Mindestviskosität von 600 mPas zu erzielen. **): die Dosierung konnte über die maximale Dosierungsangabe im Datenblatt aufgrund des zu niedrigen Gehalts an Wirksubstanz nicht weiter erhöht werden | | |

Aus der Tabelle 9 ist ersichtlich, dass die erfindungsgemäßen Produkte gegenüber den Vergleichsbeispielen zu einer geringeren Synärese des Effektpigment-Basislacks führen. Die erfindungsgemäßen Beispiele sind somit besser geeignet, um die Lagerstabilität des Effektpigment-Basislacks zu verbessern, als die Vergleichsbeispiele.

### Prüfsystem 3: Standvermögen in einem 2K-PU Weißlack

Die Herstellung des Weißlackes erfolgt nach der in Tabelle 10 angegebenen Formulierung. Danach werden jeweils 50 g des Weißlackes in einen 175 ml-PE-Becher eingewogen und das jeweilige Rheologieadditiv unter Rühren mit dem Dispermat LV mit einer Dosierung von 0,5 % Wirksubstanz (auf Gesamtlack bezogen) eingearbeitet (5 min., 1000 U/min., 2,5 cm Zahnscheibe). Das Vergleichsbeispiel **VB3** erfordert eine Einarbeitung während der Herstellung des Lackes (Rezeptur siehe Tabelle 10 in Verbindung mit Tabelle 11). Anschließend lässt man die Proben 1 Tag bei RT stehen und führt anschließend die Prüfung des Standvermögens als Maß der rheologischen Wirksamkeit unter Applikationsbedingungen durch.

Hierzu wird die Härterlösung in dem angegebenen Mischungsverhältnis mit dem Spatel in die jeweilige Lackprobe 1 min. lang eingerührt und anschließend appliziert. Die Applikation erfolgt mit einer Stufenrakel (Modell 421/l) der Fa. Erichsen bei einer Nassfilmschichtdicke von 30-300µm und einer automatischen Aufziehbank der Fa. BYK-Gardner bei einer Geschwindigkeit von 5 cm/s auf BYK-Gardner-Kontrastkarten Nr. 2801. Nach der Applikation werden die Kontrastkarten direkt horizontal zur Trocknung aufgehängt. Nach der Trocknung wird die Schichtdicke in µm (nass) bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit des Additivs. Neben der Wirksamkeit spielt auch die Verträglichkeit des Rheologieaddives eine wichtige Rolle für die Eignung. Die Bewertung der Verträglichkeit erfolgt durch Messung des Glanz bei 20° mit einem Mikro-Trigloss der Fa. BYK-Gardner bei einer Nassfilmschichtdicke von 90 µm nach erfolgter Trocknung über Nacht.

Je höher der Glanzgrad, desto besser ist die Verträglichkeit des jeweiligen Rheologieadditivs. Nur wenn ein Rheologieadditiv das Standvermögen verbessert, ohne den Glanz gegenüber der Nullprobe zu reduzieren, ist es für den Einsatz geeignet.

**Tabelle 10: 2K-PU Weißlack**

| **Komponente A:** | Nullprobe und andere Beispiele | AQ610-Halbfabrikat gemäß Tabelle 11* |
|---|---|---|
| Bayhydrol A 145 | 48,0g | 48,0g |
| BYK-011 | 1,6g | 1,6g |
| DMEA (10%-ig) | 4,2g | 4,2g |
| Disperbyk-194 | 2,1g | 2,1g |
| VE-Wasser | 18,4g | - |
| AQ-610 Halbfabrikat (3%-ig) | - | 20,9g |
| Tronox RKB-4 | 25,3g | 25,3g |

| *Dispermat CV, 30min., 8500 U*/*min.,* 18 *m*/*s, 1 mm-Glasperlen (Verhältnis Mahlgut: Perlen =* 1:1) | | |
|---|---|---|
| BYK-345 | 0,3g | 0,3g |
| BYK-333 | 0,1g | 0,1g |
| Gesamt | 100,0g | 102,5g |

| **Komponente B:** | Nullprobe und andere Beispiele | AQ610-Halbfabrikat gemäß Tabelle 11* |
|---|---|---|
| Bayhydur304 | 20,5g | 20,5g |
| MPA | 4,5g | 4,5g |
| Gesamt | 25,0g | 25,0g |
| | | |
| Mischungsverhältnis A : B | **40 : 10** | **41** : **10** |

| | | |
|---|---|---|
| **): Datenblatt des Vergleichsprodukts (AQ610) verlangt aufgrund der Darreichungsform eine vorherige Herstellung als Halbfabrikat vor Einsatz im Lack.* | | |

**Tabelle 11: Halbfabrikat AQ-610**

| | |
|---|---|
| VE Wasser | 80,0g |

| Dispermat CV, 20 min., 2000 U/min., 2,5 cm-Zahnscheibe | |
|---|---|
| **VB3** | 20,0g |
| Gesamt | 100,0g |

**Tabelle 12: Ergebnisse**

| **Produkt** | **Standvermögen [µm]** | **Glanz 20°** |
|---|---|---|
| **Nullprobe** | 90 | 50 |
| **VB2** | 90 | 69 |
| **VB3** | 210 | 9 |
| **VB5** | 120 | 65 |
| **VB6** | 150 | 67 |
| **B1** | 180 | 60 |
| **B2** | 180 | 65 |
| **B3** | 350 | 55 |
| **B4** | 180 | 65 |
| **B7** | 180 | 51 |
| **B12** | 180 | 62 |
| **B14** | 180 | 64 |
| **B15** | 180 | 64 |

Aus der Tabelle 12 ist ersichtlich, dass die erfindungsgemäßen Produkte gegenüber der Nullprobe zum einen ein deutlich verbessertes Standvermögen aufweisen und zum anderen den Glanz nicht verschlechtern. Im Vergleich zu den erfindungsgemäßen Produkten zeigt sich, dass die Vergleichsprodukte nur entweder ein gutes Standvermögen oder einen guten Glanzwert erzielen, nicht jedoch beide Eigenschaften in Kombination, so wie es mit den erfindungsgemäßen Produkten möglich ist.

### Prüfsystem 4: Standvermögen in einem Acrylat-Styrol-Copolymer-Klarlack

Die Herstellung des Klarlackes erfolgt nach der in Tabelle 13 angegebenen Formulierung. Danach werden jeweils 50 g des Klarlackes in einen 175 ml-PE-Becher eingewogen und das jeweilige Rheologieadditiv unter Rühren mit dem Dispermat LV mit einer Dosierung von 0,5 % Wirksubstanz (auf Gesamtlack bezogen) eingearbeitet (5 min., 1000 U/min., 2,5 cm Zahnscheibe). Anschließend lässt man die Proben 1 Tag bei RT stehen und führt anschließend die Prüfung des Standvermögens als Maß der rheologischen Wirksamkeit unter Applikationsbedingungen durch.

Hierzu wird die Probe mit einer Stufenrakel (Modell 421/l) der Fa. Erichsen bei einer Nassfilmschichtdicke von 30-300 µm und einer automatischen Aufziehbank der Fa. BYK Gardner bei einer Geschwindigkeit von 5 cm/s auf BYK-Gardner-Kontrastkarten Nr. 2801. Nach der Applikation werden die Kontrastkarten direkt horizontal zur Trocknung aufgehängt. Nach der Trocknung wird die Schichtdicke in µm (nass) bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit.

**Tabelle 13: Klarlack auf Basis Acrylat-Styrol-Copolymer**

| | |
|---|---|
| Neocryl XK-205 | 75,0g |
| Butylglykol | 10,0g |
| VE-Wasser | 13,4g |
| BYK-024 | 0,5g |
| BYK-346 | 1,0g |
| AMP-90 | 0,1g* |

| Dispermat LV, 5 min, 1000 U/min, 4 cm-Zahnscheibe | |
|---|---|
| Gesamt | 100,0g |

| | |
|---|---|
| Herstellung des Klarlackes unter Rühren *): Einstellung des pH-Wertes mit AMP-90 auf pH 8,2 - 8,5 | |

**Tabelle 14: Ergebnisse**

| **Produkt** | **Standvermögen [µm]** | **Visuelle Bewertung** |
|---|---|---|
| **Nullprobe** | 30 | i.O. |
| **VB4** | 180 | Gelteilchen |
| **VB6** | 60 | i.O. |
| **VB8** | 90 | i.O. |
| **VB9** | 120 | i.O. |
| **VB10** | 200 | Stippen |
| **B2** | 300 | i.O. |
| **B3** | 350 | i.O. |
| **B4** | 300 | i.O. |
| **B14** | 300 | i.O. |
| **B17** | 210 | i.O. |
| **B18** | 180 | i.O. |
| **B19** | 210 | i.O. |
| **B20** | 240 | i.O. |
| **B21** | 250 | i.O. |

Aus der Tabelle 14 ist ersichtlich, dass die erfindungsgemäßen Produkte gegenüber den Vergleichsbeispielen zu einem deutlich besseren Standvermögen führen ohne zu einer optischen Beeinträchtigung zu führen. Das Vergleichsbeispiel **VB4** führt zwar zu einem vergleichbaren Standvermögen wie das Beispiel **B9,** wirkt sich jedoch optisch im trockenen Lackfilm negativ aus, da es Gelteilchen zeigt. Die Verarbeitbarkeit bzw. Verträglichkeit des Vergleichsbeispiels **VB4** ist somit schlechter als die der erfindungsgemäßen Beispiele. **VB10** und **B21** unterscheiden sich maßgeblich darin, dass **VB10** im Gegensatz zu **B21** keine COOH Endgruppe trägt sondern mit Tallölfettsäure verkappt ist. **VB10** besitzt im Vergleich zu **B21** ein geringeres Standvermögen und aufgrund der Stippenbildung eine inakzeptable Appearance.

### Prüfsystem 5: Lagerstabilität eines Eisenoxidgelb-Pigmentkonzentrates

Die Herstellung des Pigmentkonzentrates erfolgt nach der in Tabelle 15 angegebenen Formulierung. Danach werden jeweils 50 g des Pigmentkonzentrates in einen 175 ml-PE-Becher eingewogen und das jeweilige Rheologieadditiv unter Rühren mit dem Dispermat LV mit einer Dosierung von 0,5 % Wirksubstanz (auf Gesamt bezogen) eingearbeitet (5 min., 1000 U/min., 2,5 cm Zahnscheibe). Einzig das Halbfabrikat von **VB3** musste aufgrund des niedrigen Gehaltes an Wirksubstanz in das Mahlgut eingearbeitet werden. Anschließend werden die Pigmentkonzentrate in 50 ml-Schnappdeckelgläser abgefüllt und 6 Wochen bei 40°C gelagert. Die Beurteilung der Lagerstabilität des Pigmentkonzentrates erfolgt durch Messung der Synäresebildung in Prozent im Vergleich zum Gesamtvolumen und durch visuelle Beurteilung des Bodensatzes mit Hilfe eines Metallspatels. Je niedriger der Wert für die Synärese und den Bodensatz ist, desto besser ist die Lagerstabilität des Pigmentkonzentrates und somit die rheologische Wirksamkeit des jeweiligen Rheologieadditives.

**Tabelle 15: Formulierung Eisenoxidgelb Pigmentkonzentrat**

| Komponente : | Nullprobe und andere Beispiele | AQ610-Halbfabrikat gemäß Tabelle 11* |
|---|---|---|
| VE-Wasser | 23,6g | 9,0g |
| Acticide MBS | 0,1g | 0,1g |
| BYK-1730 | 0,5g | 0,5g |
| DISPERBYK-194 | 12,5g | 12,5g |
| Halbfabrikat AQ-610 | - | 16,6g |
| Bayferrox 3920 | 50,0g | 50,0g |

| Dispermat CV, 20min., 8500 U/min., 4cm-Zahnscheibe, 40°C | | |
|---|---|---|
| VE-Wasser | 13,3 | 13,3g |
| Gesamt | 100,0g | 102,0g |

**Tabelle 16: Ergebnisse**

| **Probe** | **Synärese / %** | **Bodensatz visuell *** |
|---|---|---|
| **Nullprobe** | 45 | 4 |
| **VB1** | 38 | 3 |
| **VB3** | 40 | 3 |
| **VB4** | 35 | 3 |
| **B3** | 30 | 2 |
| **B11** | 28 | 2 |
| **B12** | 32 | 2-3 |
| **B13** | 26 | 2 |
| **B14** | 30 | 2 |

| | | |
|---|---|---|
| *) Bodensatz: 1: keiner / 2: gering / 3: mittel / 4: stark / 5: sehr stark | | |

Aus der Tabelle16 ist ersichtlich, dass die erfindungsgemäßen Produkte gegenüber der Nullprobe und den Vergleichsbeispielen zu einer geringeren Synärese und geringerem Bodensatz führen. Die erfindungsgemäßen Beispiele sind somit besser geeignet, um die Lagerstabilität des Eisenoxidgelben Pigmentkonzentrates zu verbessern als die Vergleichsbeispiele.

### Prüfsystem 6: Anti-Absetzen in einem wässrigen Basecoat

Die Herstellung des Effektpigment-Slurries und des Basislackes erfolgt nach der in Tabelle 17 und 18 angegebenen Formulierung. Danach werden jeweils 50 g des Basislackes in eine 100 ml Glasflasche eingewogen und 4 Tage bei RT gelagert. Die Beurteilung des Absetzverhaltens des Effektpigment- Basislackes erfolgt durch Messung der Synäresebildung in Prozent im Vergleich zum Gesamtvolumen. Je geringer der Wert für die Synärese ist, desto besser sind die Anti-Absetzeigenschaften und somit die rheologische Wirksamkeit des jeweiligen Rheologieadditivs.

**Tabelle 17: Effektpigment-Slurry**

| | |
|---|---|
| Butylglykol | 47,9 g |
| DISPERBYK-180 | 1,5 g |

| Dispermat LV, 10 min., 800 U/min., 5 cm Flügelrührer | |
|---|---|
| Hydrolan IL 2154 | 50,6 g |
| Gesamt | 100,0 g |

**Tabelle 18: Effektpigment-Basislack**

| | |
|---|---|
| Daotan VTW 6462 | 44,7 g |
| VE Wasser | 13,7 g |
| Isobutanol | 2,2 g |
| BYK-011 | 0,1 g |
| BYK-347 | 0,3 g |
| DMEA (10% in Wasser) | 1,6 g |
| Effektpigment Slurry | 13,0 g |
| Rheologieadditiv 25%ig | 4,0 g |
| VE-Wasser | 20,4 g |
| Gesamt | 100,0 g |
| Zugabe der Einzelkomponenten unter Rühren, nach Zugabe der letzten Komponente 10 min. weiterrühren, Dispermat LV, 5 cm Flügelrührer, 800 U/min. | |

**Tabelle 19: Ergebnisse**

| **Produkt** | **Synärese [%]** |
|---|---|
| **Nullprobe** | 91 |
| **B17** | 35 |
| **B21** | 57 |
| **VB10** | 64 |

Aus der Tabelle 19 ist ersichtlich, dass die erfindungsgemäßen Beispiele besser zu einer geringeren Synäresebildung führen als die jeweiligen Vergleichsbeispiele. Die erfindungsgemäßen Beispiele sind somit besser geeignet, das Absetzen im Basislack zu vermeiden, als die Vergleichsbeispiele.

## Patentansprüche

1. Harnstoff- und/oder Urethan-subsituiertes Amid der allgemeinen Formel (I) 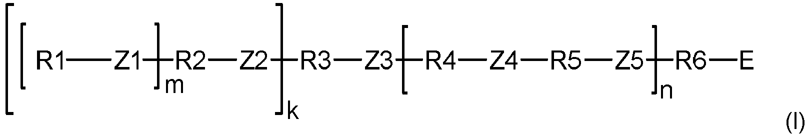 **gekennzeichnet dadurch, dass**
die Reste R1 unabhängig voneinander gewählt sind aus der Gruppe bestehend aus
Wasserstoff, für den Fall, dass m = 1 und Z1 eine kovalente Bindung ist, und Resten R^{a}-[O-(C=O)ᵤR^{b}]ᵥ, worin
R^{a} gewählt ist aus der Gruppe bestehend aus gesättigten oder ungesättigten, linearen oder verzweigten, aliphatischen Kohlenwasserstoff-Resten mit 1 bis 40 Kohlenstoffatomen;
aromatischen Kohlenwasserstoffresten mit 6 bis 40 Kohlenstoffatomen; und araliphatischen Kohlenwasserstoffresten mit 7 bis 40 Kohlenstoffatomen;
u für 0 oder 1 steht,
v für 0 bis 50 steht,
die Reste R^{b} unabhängig voneinander für zweiwertige organische Reste stehen, die
wenn u = 0, für lineare oder verzweigte Alkylenreste mit 2 bis 24 Kohlenstoffatomen stehen, wobei, für den Fall, dass ein Alkylenrest zwei Kohlenstoffatome enthält, dieser einen Substituenten mit der Formel CH₂-O-(C=O)_{W}R^{c} tragen kann, worin w für 0 oder 1 steht und R^{c} für einen organischen Rest mit 2 bis 24 Kohlenstoffatomen steht; und die Reste R^{b},
wenn u = 1, für lineare oder verzweigte Alkylenreste mit 3 bis 8 Kohlenstoffatomen stehen; und
in den Resten [O-(C=O)ᵤR^{b}] der Wert für u in jedem Rest unabhängig 0 oder 1 ist, wobei die Reste [O-(C=O)ᵤR^{b}] für die u = 0 gilt vorzugsweise in einem oder mehreren Blöcken angeordnet sind und die Reste [O-(C=O)ᵤR^{b}] für die u = 1 gilt vorzugsweise in einem oder mehreren Blöcken angeordnet sind;
die Reste R2 unabhängig voneinander für zweiwertige organische Reste stehen, die gewählt sind aus der Gruppe bestehend aus
Kohlenwasserstoff-Resten mit 6 bis 40 Kohlenstoffatomen, welche gegebenenfalls ein oder mehrere Isocyanuratgruppen enthalten;
die Reste R3 unabhängig voneinander für (k+1)-wertige organische Reste stehen, die gewählt sind aus der Gruppe bestehend aus
gesättigten oder ungesättigten, linearen oder verzweigten, aliphatischen Kohlenwasserstoff-Resten mit 2 bis 40 Kohlenstoffatomen, die gegebenenfalls ein oder mehrere Ethersauerstoffatome enthalten und/oder eine oder mehrere Hydroxylgruppen tragen;
aromatischen Kohlenwasserstoffresten mit 6 bis 40 Kohlenstoffatomen, wobei die aromatischen Kohlenwasserstoffreste gegebenenfalls ein oder mehrere lineare oder verzweigte Alkylsubstituenten mit 1 bis 10 Kohlenstoffatomen tragen; und
araliphatischen Kohlenwasserstoffresten mit 8 bis 40 Kohlenstoffatomen, wobei die aromatischen Kohlenwasserstoffreste gegebenenfalls ein oder mehrere lineare oder verzweigte Alkylsubstituenten mit 1 bis 10 Kohlenstoffatomen tragen, und
für einen Rest N-R2-Z1-R1, wenn Z2 für eine Gruppe NH-(C=O) steht, und wobei N in Z2 und Z3 an das jeweilige Kohlenstoffatom in NH-(C=O) gebunden ist und m = k = 1 gilt,
die Reste R4 unabhängig voneinander für zweiwertige organische Reste stehen, die gewählt sind aus der Gruppe bestehend aus
gesättigten oder ungesättigten, linearen oder verzweigten aliphatischen Kohlenwasserstoff-Resten mit 2 bis 40 Kohlenstoffatomen, wobei diese gegebenenfalls mit einer oder mehreren Hydroxylgruppen substituiert sind;
die Reste R5 unabhängig voneinander für zweiwertige organische Reste stehen, die gewählt sind aus der Gruppe bestehend aus
gesättigten oder ungesättigten, linearen oder verzweigten, aliphatischen Kohlenwasserstoff-Resten mit 2 bis 40 Kohlenstoffatomen, wobei die Kohlenwasserstoffreste gegebenenfalls Ethersauerstoffatome und/oder tertiäre Aminogruppen enthalten; und
araliphatischen Kohlenwasserstoffresten mit 8 bis 40 Kohlenstoffatomen;
aromatischen Kohlenwasserstoffresten mit 6 bis 40 Kohlenstoffatomen;
die Reste R6 gewählt sind aus der Gruppe der aromatischen Reste mit 6 bis 40 Kohlenstoffatomen oder wie die Reste R4 definiert sind und unabhängig von diesen gewählt sind;
die Reste E unabhängig voneinander für COOH oder COO ^{⊖} Z ^{⊕} stehen, wobei Z ^{⊕} gewählt ist aus der Gruppe bestehend aus Alkalimetallkationen, NH₄^{⊕}, heterocyclischen Kationen, 1- bis 4-fach organisch substituierten Ammoniumionen, deren organische Subsituenten vorzugsweise gewählt sind aus der Gruppe der Alkylreste mit 1 bis 24 Kohlenstoffatomen, Arylreste mit 6 bis 24 Kohlenstoffatomen, Alkylarylreste mit 7 bis 25 Kohlenstoffatomen, wobei die Alkylreste, Arylreste und Alkylarylreste gegebenenfalls eine oder mehrere Hydroxylgruppen tragen und Erdalkalimetallkationen oder wobei Z^{⊕} entfällt, wenn Z5 eine protonierte oder quaternisierte Aminogruppe ist,
wobei im Falle der Erdalkalimetallkationen Z ^{⊕} für ½ Z^{2 ⊕} steht,
die Reste Z1 unabhängig voneinander für eine Urethangruppe, eine Harnstoffgruppe oder eine kovalente Bindung stehen;
die Reste Z2 unabhängig voneinander für eine Urethangruppe oder eine Harnstoffgruppe stehen, oder, wenn R3 für einen Rest N-R2-Z1-R1 steht, Z2 für eine Gruppe NH-(C=O) steht;
die Reste Z3 für eine Amidgruppe stehen;
die Reste Z4 für eine Amidgruppe stehen;
die Reste Z5 unabhängig voneinander für eine Amidgruppe oder für eine Aminogruppe stehen, wobei die Aminogruppe auch protoniert oder quaternisiert vorliegen kann und wobei in diesem Fall Z ^{⊕} entfällt;
m für 1 bis 5 steht;
n für 1 bis 12 steht;
k für 1 bis 5 steht.

2. Harnstoff- und/oder Urethan-subsituierten Amide gemäß Anspruch 1, worin wenigstens einer der Reste R1, R2, R3, R4, R5, R6 und E wie folgt definiert ist:
R1 ist ausgewählt aus der Gruppe bestehend aus
(i) linearen oder verzweigten Alkyl- oder Alkenylresten mit 6 bis 24 Kohlenstoffatomen und
(ii) Polyetherresten der Formel R^{a}-[O-R ^{b}]ᵥ, worin R^{a} für einen linearen oder verzweigten Alkyl- oder Alkenylrest mit 1 bis 18 Kohlenstoffatomen steht, R^{b} für einen oder mehrere Reste aus der Gruppe bestehend aus C₂H₄, C₃H₆ und C₄H₈ steht und v für eine ganze Zahl von 1 bis 25 steht;
R2 ist ausgewählt aus der Gruppe bestehend aus 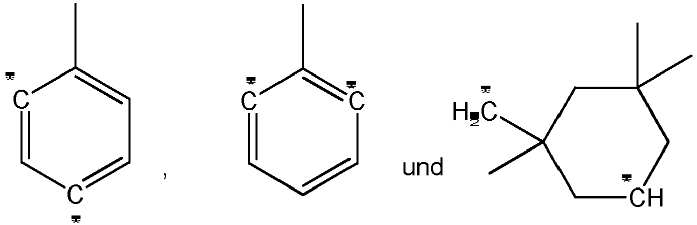 wobei m=1 ist, Z1 = -O-(C=O)-NH- und Z2 = -NH-(C=O)-O- ist, und die Symbole"*" die Bindungsstellen des jeweiligen Rests R2 an die Reste Z1 und Z2 kennzeichnen;
R3 ist ausgewählt aus der Gruppe bestehend aus
(i) Alkylenresten mit 2 bis 6 Kohlenstoffatomen, wobei k für die Zahl 1 steht, und
(ii) Alkylenresten mit 4 bis 6 Kohlenstoffatomen, die vorzugsweise mit Hydroxylgruppen substituiert sind, wobei k für die Zahl 1, 2 oder 3 steht;
R4 ist ausgewählt aus der Gruppe bestehend aus linearen oder verzweigten Alkylen- oder Alkenylenresten mit 4 bis 40 Kohlenstoffatomen;
R5 ist ausgewählt aus der Gruppe bestehend aus linearen oder verzweigten Alkylenresten mit 2 bis 13 Kohlenstoffatomen, Cycloalkylenresten mit 3 bis 13 Kohlenstoffatomen und Arylalkylenresten mit 7 bis 13 Kohlenstoffatomen;
R6 ist ausgewählt aus der Gruppe bestehend aus linearen oder verzweigten Alkylen- oder Alkenylenresten mit 4 bis 40 Kohlenstoffatomen; und
E ist eine Gruppe COOH.

3. Harnstoff- und/oder Urethan-subsituierten Amide gemäß Anspruch 2, worin alle Reste R1, R2, R3, R4, R5, R6 und E wie in Anspruch 2 definiert sind.

4. Rheologiesteuerungsmittel enthaltend oder bestehend aus einem oder mehreren Harnstoff- und/oder Urethan-subsituierten Amiden wie sie in einem oder mehreren der Ansprüche 1 bis 3 definiert sind.

5. Verfahren zur Herstellung der Rheologiesteuerungsmittel wie sie in Anspruch 4 definiert sind, **dadurch gekennzeichnet, dass**
(A1) eine oder mehrere Spezies der Formel (III)
R1-X-H (III)
worin X für O oder N(R7) steht, wobei R7 für H, einen Alkylrest mit 1 bis 12 Kohlenstoffatomen, einen Arylrest mit 6 bis 12 Kohlenstoffatomen oder einen Alkylarylrest mit 7 bis 12 Kohlenstoffatomen steht,
mit
mit einer oder mehreren Spezies der allgemeinen Formel (IV)
R2(NCO)m+1 (IV)
umgesetzt werden; oder
(A2) ein oder mehrere eine Uretdiongruppe enthaltende Diisocyanate mit einer oder mehreren Spezies der allgemeinen Formel (III)
R1-X-H (III)
deren Reste wie unter (A1) definiert sind,
unter Beibehaltung der Uretdionfunktion und Reaktion beider Isocyanatgruppen zu entsprechenden uretdion-funktionellen Urethanen und/oder uretdion-funktionellen Harnstoffen umgesetzt werden;
(B1) eine oder mehrere Spezies der allgemeinen Formel (VI)
Y-(O=C)-R4-(C=O)-Y' (VI)
wobei Y und Y' unabhängig voneinander für OR^{e} oder Halogenid stehen oder Y und Y' miteinander verbunden sind und gemeinsam als Y-Y' für ein Sauerstoffatom stehen, und wobei R^{e} für Wasserstoff oder für R^{d}, wobei R^{d} eine Schutzgruppe für eine Carboxylgruppe darstellt, steht,
mit einem oder mehreren Diaminen der allgemeinen Formel (VII)
H₂N-R5-NH₂ (VII)
gegebenenfalls in Gegenwart einer oder mehrerer Spezies der allgemeinen Formel (VIII)
(HX)ₖ-R3-NH(R8) (VIII)
umgesetzt werden, wobei X wie in Formel (III) definiert ist und worin R8 für H,
einen Alkylrest mit 1 bis 12 Kohlenstoffatomen, der gegebenenfalls ein oder mehrere Ethersauerstoffatome enthält und/oder eine oder mehrere Hydroxylgruppen trägt,
einen Arylrest mit 6 bis 12 Kohlenstoffatomen,
einen Alkylarylrest mit 7 bis 12 Kohlenstoffatomen, oder
einen Rest -R3'[-Z2-R2-[Z1-R1]_{m'}]_{k'} steht,
worin
R3' ein (k'+1)-wertiger organischer Rest ist, der im Übrigen wie Rest R3 definiert ist, R1, R2, Z1 und Z2 wie in Formel (I) definiert sind,
m' wie m definiert ist, mit der Maßgabe, dass
k = 1 bis 4, k' = 1 bis 4 und k + k' = 2 bis 5 ist;
und im Falle der Bildung eines endständigen Restes -R5-NH₂, dieser Rest
(a) mit einer oder mehreren Spezies der allgemeinen Formel (VIa)
Y-(O=C)-R6-E' (VIa)
worin, E' für E oder COOR^{d} steht und falls E' = (C=O)-Y' ist, Y und Y' wie in Formel (VI) definiert sind,
oder
(b) mit einer oder mehreren Spezies der allgemeinen Formel (X)
H₂C=C(R^{f})-E' (X)
wobei R^{f} für Wasserstoff oder einen Alkylrest mit 1 oder 2 Kohlenstoffatomen steht,
in einem solchen stöchiometrischen Verhältnis zur Reaktion bringt, dass der resultierende amidgruppenhaltige Baustein (B1) genau eine Endgruppe E' enthält; oder
(B2) ein oder mehrere Aminocarbonsäuren der allgemeinen Formeln (IXa) und/oder (IXb)
HOOC-R4-NH₂ (IXa)
und/oder
HOOC-R5-NH₂ (IXb)
in einer Polykondensationsreaktion in Gegenwart einer oder mehrerer Spezies der allgemeinen Formel (VIII)
(HX)ₖ-R3-NH(R8) (VIII),
umgesetzt werden, wobei X wie in Formel (III) definiert ist und worin R8 für H,
einen Alkylrest mit 1 bis 12 Kohlenstoffatomen, der gegebenenfalls eine oder mehrere Ethersauerstoffatome enthält und/oder ein oder mehrere Hydroxylgruppen trägt,
einen Arylrest mit 6 bis 12 Kohlenstoffatomen,
einen Alkylarylrest mit 7 bis 12 Kohlenstoffatomen, oder
einen Rest -R3'[-Z2-R2-[Z1-R1]_{m'}]_{k'} steht,
worin
R3' ein (k'+1)-wertiger organischer Rest ist, der im Übrigen wie Rest R3 definiert ist, R1, R2, Z1 und Z2 wie in Formel (I) definiert sind,
m' wie m definiert ist, mit der Maßgabe, dass
k = 1 bis 4, k' = 1 bis 4 und k + k' = 2 bis 5 ist;
und die so erhaltenen Spezies wiederum
(a) mit einer oder mehreren Spezies der allgemeinen Formel (VIa)
Y-(O=C)-R6-E' (VIa)
worin, E' für E oder COOR^{d} steht und falls E' = (C=O)-Y' ist, Y und Y' wie in Formel (VI) definiert sind, oder
(b)mit einer oder mehreren Spezies der allgemeinen Formel (X)
H₂C=C(R^{f})-E' (X)
wobei R^{f} Wasserstoff oder für einen Alkylrest mit 1 oder 2 Kohlenstoffatomen steht, in einem solchen stöchiometrischen Verhältnis zur Reaktion bringt, dass der resultierende amidgruppenhaltige Baustein (B2) genau eine Endgruppe E' enthält; oder
(B3) ein oder mehrere Lactame der allgemeinen Formeln (Xia) und/oder (XIb) 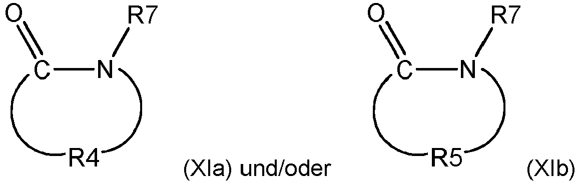 wobei mindestens ein Rest R7 für Wasserstoff steht durch ringöffnende Polymerisation
(a)in Gegenwart einer oder mehrerer Spezies der allgemeinen Formel (XII)
(HO)ₖ-R3-COOH (XII)
oder
(b) in Gegenwart einer oder mehrerer Spezies der allgemeinen Formel
(HX)ₖ-R3-NH(R8) (VIII),
worin
R8 für H,
einen Alkylrest mit 1 bis 12 Kohlenstoffatomen, der gegebenenfalls eine oder mehrere Ethersauerstoffatome enthält und/oder ein oder mehrere Hydroxylgruppen trägt,
einen Arylrest mit 6 bis 12 Kohlenstoffatomen,
einen Alkylarylrest mit 7 bis 12 Kohlenstoffatomen, oder
einen Rest -R3'[-Z2-R2-[Z1-R1]_{m'}]_{k'} steht,
worin
R3' ein (k'+1)-wertiger organischer Rest ist, der im Übrigen wie Rest R3 definiert ist, R1, R2, Z1 und Z2 wie in Formel (I) definiert sind,
m' wie m definiert ist, mit der Maßgabe, dass
k = 1 bis 4, k' = 1 bis 4 und k + k' = 2 bis 5 ist,
umgesetzt werden,
wobei im Fall (b) die so erhaltenen Spezies wiederum
(c) mit einer oder mehreren Spezies der allgemeinen Formel (VIa)
Y-(O=C)-R6-E' (VIa)
worin, E' für E oder COOR^{d} steht und falls E' = (C=O)-Y' ist, Y und Y' wie in Formel (VI) definiert sind,
oder
(d)mit einer oder mehreren Spezies der allgemeinen Formel (X)
H₂C=C(R^{f})-E' (X)
wobei R^{f} für Wasserstoff oder einen Alkylrest mit 1 oder 2 Kohlenstoffatomen steht,
in einem solchen stöchiometrischen Verhältnis zur Reaktion bringt, dass der resultierende amidgruppenhaltige Baustein (B2) genau eine Endgruppe E' enthält; und wobei anschließend
eine oder mehrere aus (A1) und/oder (A2) resultierende Spezies mit einer oder mehreren aus (B1), (B2) und/oder (B3) resultierenden Spezies umgesetzt werden,
und falls E' für COOR^{d} steht, die Schutzgruppe R^{d} abgespalten wird, wobei E' gegebenenfalls durch Versalzung, in E überführt wird.

6. Verwendung der Harnstoff- und/oder Urethan-subsituierten Amide wie sie in Ansprüchen 1 bis 3 definiert sind und/oder der Rheologiesteuerungsmittel des Anspruchs 4 und/oder eines oder mehrerer Rheologiesteuerungsmittel erhältlich nach einem Verfahren gemäß Anspruch 5 als Verdickungsmittel, Antiablaufmittel und/oder Antiabsetzmittel.

7. Flüssige Zusammensetzung enthaltend ein oder mehrere Harnstoff- und/oder Urethan-subsituierte Amide wie sie in Ansprüchen 1 bis 3 definiert sind und/oder ein oder mehrere Rheologiesteuerungsmittel des Anspruchs 4 und/oder eines oder mehrerer Rheologiesteuerungsmittel erhältlich nach einem Verfahren gemäß Anspruch 5.

8. Flüssige Zusammensetzung gemäß Anspruch 7 enthaltend ein oder mehrere polare, aprotische Lösemittel.

9. Flüssige Zusammensetzung gemäß einem der Ansprüche 7 oder 8, wobei es sich um eine Rheologiesteuerungsmittel-Zusammensetzung handelt.

10. Flüssige Zusammensetzung gemäß Anspruch 8 oder 9, wobei diese als Lösemittel mindestens ein Lösemittel gewählt aus der Gruppe bestehend aus N-Alkylbutyrolactamen, Dialkylsulfoxiden und Carbonsäureamiden enthält.

11. Rheologiesteuerungsmittel-Zusammensetzung gemäß Anspruch 9 oder 10, enthaltend oder bestehend aus
(i) 5 bis 70 Gew.-% eines oder mehrerer Harnstoff- und/oder Urethansubstituierter Amide wie sie in Ansprüchen 1 bis 3 definiert sind und/oder eines oder mehrerer Rheologiesteuerungsmittel gemäß Anspruch 4 und/oder eines oder mehrerer Rheologiesteuerungsmittel erhältlich nach einem Verfahren gemäß Anspruch 5,
(ii) 30 bis 95 Gew.-% eines oder mehrerer Lösemittel, und
(iii) 0 bis 4 Gew.-% einer oder mehrerer ionogener Verbindungen.

12. Rheologiesteuerungsmittel-Zusammensetzung gemäß einem der Ansprüche 9 bis 11, enthaltend oder bestehend aus
(i) 10 bis 60 Gew.-% eines oder mehrerer Harnstoff- und/oder Urethansubstituierter Amide wie sie in Ansprüchen 1 bis 3 definiert sind und/oder eines oder mehrerer Rheologiesteuerungsmittel gemäß Anspruch 4 und/oder eines oder mehrerer Rheologiesteuerungsmittel erhältlich nach einem Verfahren gemäß Anspruch 5,
(ii) 40 bis 90 Gew.-% eines oder mehrerer polarer, aprotischer, organischer Lösemittel, und
(iii) 0 bis 3 Gew.-% einer oder mehrerer ionogener Verbindungen, gewählt aus der Gruppe der Halogenide, Pseudohalogenide, Formiate, Acetate und Nitrate.

13. Flüssige Zusammensetzung gemäß Anspruch 7 oder 8, gewählt aus der Gruppe der Beschichtungsmittel, Kunststoffformulierungen, Pigmentpasten, Dichtstoffformulierungen, Kosmetika, Keramikformulierungen, Klebstoffformulierungen, flüssigen Formulierungen zum Einsatz bei der Gas- und Ölförderung, flüssigen Formulierungen zur Herstellung von elektrischen Bauelementen und Schaltkreisen, flüssigen Formulierungen zum Einsatz in Energiespeichermedien, Reinigungsmittel, Vergussmassen, Baustoffformulierungen, Schmierstoffe, Spachtelmassen, Wachsemulsionen, Metallbearbeitungs-Flüssigkeiten (Metal Working Fluids), Sprühmittel, Pflanzenschutzmittelformulierungen, Druckfarben oder Tinten.

14. Flüssige Zusammensetzung gemäß Anspruch 13, wobei die flüssige Zusammensetzung eine wässrige Zusammensetzung ist.

15. Flüssige Zusammensetzung gemäß Anspruch 13 oder 14, **dadurch gekennzeichnet, dass** die flüssige Zusammensetzung 0,1 bis 7 Gew.-% Harnstoff-und/oder Urethan-substituierte Amide wie sie in Ansprüchen 1 bis 3 definiert und/oder Rheologiesteuerungsmittel gemäß Anspruch 4 und/oder eines oder mehrerer Rheologiesteuerungsmittel erhältlich nach einem Verfahren gemäß Anspruch 5, bezogen auf das Gesamtgewicht der flüssigen Zusammensetzung, enthält.

## Claims

1. Urea- and/or urethane-substituted amide of the general formula (I) 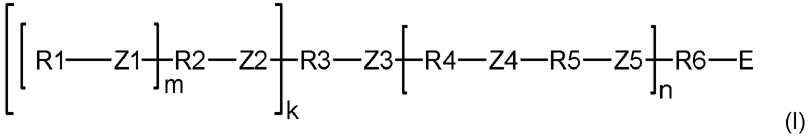 **characterized in that**
the radicals R1 independently of one another are selected from the group consisting of
hydrogen, if m = 1 and Z1 is a covalent bond, and
radicals R^{a}-[O-(C=O)ᵤR^{b}]ᵥ, in which
R^{a} is selected from the group consisting of saturated or unsaturated, linear or branched, aliphatic hydrocarbon radicals having 1 to 40 carbon atoms;
aromatic hydrocarbon radicals having 6 to 40 carbon atoms; and
araliphatic hydrocarbon radicals having 7 to 40 carbon atoms;
u is 0 or 1,
v is 0 to 50,
the radicals R^{b} independently of one another are divalent organic radicals which,
if u = 0, are linear or branched alkylene radicals having 2 to 24 carbon atoms, wherein, if an alkylene radical contains two carbon atoms, said radical may carry a substituent having the formula CH₂-O-(C=O)WR^{c}, in which w is 0 or 1 and R^{c} is an organic radical having 2 to 24 carbon atoms; and the radicals R^{b},
if u = 1, are linear or branched alkylene radicals having 3 to 8 carbon atoms; and
in the radicals [O-(C=O)ᵤR^{b}] the value for u in each radical independently is 0 or 1, wherein the radicals [O-(C=O)ᵤR^{b}] for which u = 0 are preferably arranged in one or more blocks, and the radicals [O-(C=O)ᵤR^{b}] for which u = 1 are preferably arranged in one or more blocks;
the radicals R2 independently of one another are divalent organic radicals which are selected from the group consisting of
hydrocarbon radicals having 6 to 40 carbon atoms, which optionally contain one or more isocyanurate groups;
the radicals R3 independently of one another are (k+1)-valent organic radicals which are selected from the group consisting of
saturated or unsaturated, linear or branched, aliphatic hydrocarbon radicals having 2 to 40 carbon atoms, which optionally contain one or more ether oxygen atoms and/or carry one or more hydroxyl groups;
aromatic hydrocarbon radicals having 6 to 40 carbon atoms, wherein the aromatic hydrocarbon radicals optionally carry one or more linear or branched alkyl substituents having 1 to 10 carbon atoms; and
araliphatic hydrocarbon radicals having 8 to 40 carbon atoms, wherein the aromatic hydrocarbon radicals optionally carry one or more linear or branched alkyl substituents having 1 to 10 carbon atoms; and
are a radical N-R2-Z1-R1, if Z2 is an NH-(C=O) group, and wherein N in Z2 and Z3 is bonded to the respective carbon atom in NH-(C=O), and m = k = 1,
the radicals R4 independently of one another are divalent organic radicals which are selected from the group consisting of
saturated or unsaturated, linear or branched aliphatic hydrocarbon radicals having 2 to 40 carbon atoms, wherein these are optionally substituted by one or more hydroxyl groups;
the radicals R5 independently of one another are divalent organic radicals which are selected from the group consisting of
saturated or unsaturated, linear or branched, aliphatic hydrocarbon radicals having 2 to 40 carbon atoms, wherein the hydrocarbon radicals optionally contain ether oxygen atoms and/or tertiary amino groups; and
araliphatic hydrocarbon radicals having 8 to 40 carbon atoms;
aromatic hydrocarbon radicals having 6 to 40 carbon atoms;
the radicals R6 are selected from the group of the aromatic radicals having 6 to 40 carbon atoms or are defined like the radicals R4 and are selected independently of these;
the radicals E independently of one another are COOH or COO ^{⊖} Z ^{⊕}, wherein Z^{⊕} is selected from the group consisting of alkali metal cations, NH₄ ^{⊕}, heterocyclic cations, mono- to tetra-organically substituted ammonium ions whose organic substituents are preferably selected from the group of alkyl radicals having 1 to 24 carbon atoms, aryl radicals having 6 to 24 carbon atoms, alkylaryl radicals having 7 to 25 carbon atoms, wherein the alkyl radicals, aryl radicals, and alkylaryl radicals optionally carry one or more hydroxyl groups, and alkaline earth metal cations, or wherein Z ^{⊕} is absent if Z5 is a protonated or quaternized amino group,
wherein, in the case of the alkaline earth metal cations, Z ^{⊕} is ½ Z^{2 ⊕},
the radicals Z1 independently of one another are a urethane group, a urea group or a covalent bond;
the radicals Z2 independently of one another are a urethane group or a urea group, or, if R3 is a radical N-R2-Z1-R1, Z2 is an NH-(C=O) group;
the radicals Z3 are an amide group;
the radicals Z4 are an amide group;
the radicals Z5 independently of one another are an amide group or are an amino group, wherein the amino group may also be in protonated or quaternized form and wherein Z ^{⊕} **in that** case is absent;
m is 1 to 5;
n is 1 to 12;
k is 1 to 5.

2. Urea- and/or urethane-substituted amides according to Claim 1, in which at least one of the radicals R1, R2, R3, R4, R5, R6, and E is defined as follows:
R1 is selected from the group consisting of
(i) linear or branched alkyl or alkenyl radicals having 6 to 24 carbon atoms and
(ii) polyether radicals of the formula R^{a}-[O-R^{b}]ᵥ, in which R^{a} is a linear or branched alkyl or alkenyl radical having 1 to 18 carbon atoms, R^{b} is one or more radicals from the group consisting of C₂H₄, C₃H₆ and C₄H₈ and v is an integer from 1 to 25;
R2 is selected from the group consisting of 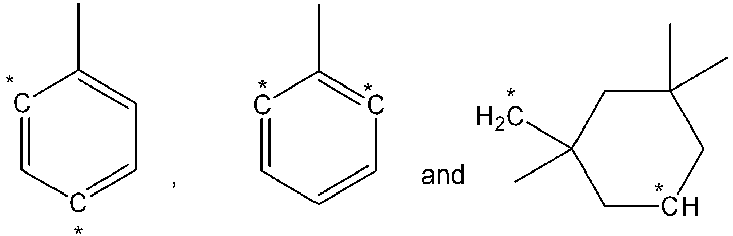 wherein m is 1, Z1 is -O-(C=O)-NH- and Z2 is -NH-(C=O)-O-, and the symbols "*" mark the bonding sites of the respective radical R2 to the radicals Z1 and Z2;
R3 is selected from the group consisting of
(i) alkylene radicals having 2 to 6 carbon atoms, wherein k is the number 1, and
(ii) alkylene radicals having 4 to 6 carbon atoms, which are preferably substituted by hydroxyl groups, wherein k is the number 1, 2 or 3;
R4 is selected from the group consisting of linear or branched alkylene or alkenylene radicals having 4 to 40 carbon atoms;
R5 is selected from the group consisting of linear or branched alkylene radicals having 2 to 13 carbon atoms, cycloalkylene radicals having 3 to 13 carbon atoms, and arylalkylene radicals having 7 to 13 carbon atoms;
R6 is selected from the group consisting of linear or branched alkylene or alkenylene radicals having 4 to 40 carbon atoms; and
E is a COOH group.

3. Urea- and/or urethane-substituted amides according to Claim 2, in which all radicals R1, R2, R3, R4, R5, R6, and E are defined as in Claim 2.

4. Rheology control agent comprising or consisting of one or more urea- and/or urethane-substituted amides as defined in one or more of Claims 1 to 3.

5. Method for producing a rheology control agent as defined in Claim 4, **characterized in that**
(A1) one or more species of the formula (III)
R1-X-H (III)
in which X is O or N(R7), wherein R7 is H, an alkyl radical having 1 to 12 carbon atoms, an aryl radical having 6 to 12 carbon atoms or an alkylaryl radical having 7 to 12 carbon atoms,
are reacted with
with one or more species of the general formula (IV)
R2(NCO)m+1 (IV);
or
(A2) one or more diisocyanates containing a uretdione group are reacted with one or more species of the general formula (III)
R1-X-H (III)
whose radicals are defined as under (A1),
with retention of the uretdione function and reaction of both isocyanate groups to give corresponding uretdione-functional urethanes and/or uretdione-functional ureas;
(B1) one or more species of the general formula (VI)
Y-(O=C)-R4-(C=O)-Y' (VI)
wherein Y and Y' independently of one another are OR^{e} or halide, or Y and Y' are connected to one another and together as Y-Y' are an oxygen atom, and wherein R^{e} is hydrogen or is R^{d}, wherein R^{d} is a protective group for a carboxyl group,
are reacted with one or more diamines of the general formula (VII)
H₂N-R5-NH₂ (VII)
optionally in the presence of one or more species of the general formula (VIII)
(HX)ₖ-R3-NH(R8) (VIII)
wherein X is defined as in formula (III) and in which
R8 is H,
an alkyl radical having 1 to 12 carbon atoms, which optionally contains one or more ether oxygen atoms and/or carries one or more hydroxyl groups,
an aryl radical having 6 to 12 carbon atoms,
an alkylaryl radical having 7 to 12 carbon atoms, or
a radical -R3'[-Z2-R2-[Z1-R1]_{m'}]_{k'},
in which
R3' is a (k'+1)-valent organic radical, which is otherwise defined like radical R3,
R1, R2, Z1, and Z2 are defined as in formula (I),
m' is defined like m, with the proviso that
k = 1 to 4, k' = 1 to 4, and k + k' = 2 to 5;
and, in the case of the formation of a terminal radical -R5-NH₂, this radical is reacted
(a)with one or more species of the general formula (VIa)
Y-(O=C)-R6-E' (VIa)
in which E' is E or COOR^{d} and, if E' is (C=O)-Y', Y and Y' are defined as in formula (VI), or
(b)with one or more species of the general formula (X)
H₂C=C(R^{f})-E' (X)
wherein R^{f} is hydrogen or an alkyl radical having 1 or 2 carbon atoms,
in a stoichiometric ratio such that the resulting building block (B1) containing amide groups contains exactly one end group E';
or
(B2) one or more amino carboxylic acids of the general formulae (IXa) and/or (IXb)
HOOC-R4-NH₂ (IXa)
and/or
HOOC-R5-NH₂ (IXb)
are reacted in a polycondensation reaction in the presence of one or more species of the general formula (VIII)
(HX)ₖ-R3-NH(R8) (VIII),
wherein X is defined as in formula (III) and in which
R8 is H,
an alkyl radical having 1 to 12 carbon atoms, which optionally contains one or more ether oxygen atoms and/or carries one or more hydroxyl groups,
an aryl radical having 6 to 12 carbon atoms,
an alkylaryl radical having 7 to 12 carbon atoms, or
a radical -R3'[-Z2-R2-[Z1-R1]_{m'}]_{k'},
in which
R3' is a (k'+1)-valent organic radical, which is otherwise defined like radical R3,
R1, R2, Z1, and Z2 are defined as in formula (I),
m' is defined like m, with the proviso that
k = 1 to 4, k' = 1 to 4, and k + k' = 2 to 5;
and the species thus obtained are reacted in turn
(a) with one or more species of the general formula (VIa)
Y-(O=C)-R6-E' (VIa)
in which E' is E or COOR^{d} and, if E' is (C=O)-Y', Y and Y' are defined as in formula (VI),
or
(b) with one or more species of the general formula (X)
H₂C=C(R^{f})-E' (X)
wherein R^{f} is hydrogen or an alkyl radical having 1 or 2 carbon atoms,
in a stoichiometric ratio such that the resulting building block (B2) containing amide groups contains exactly one end group E';
or
(B3) one or more lactams of the general formulae (Xla) and/or (XIb) 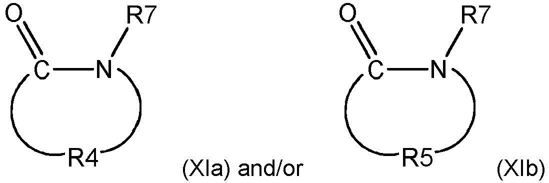 wherein at least one radical R7 is hydrogen are reacted by ring-opening polymerization
(a) in the presence of one or more species of the general formula (XII)
(HO)ₖ-R3-COOH (XII)
or
(b) in the presence of one or more species of the general formula
(HX)ₖ-R3-NH(R8) (VIII),
in which
R8 is H,
an alkyl radical having 1 to 12 carbon atoms, which optionally contains one or more ether oxygen atoms and/or carries one or more hydroxyl groups, an aryl radical having 6 to 12 carbon atoms,
an alkylaryl radical having 7 to 12 carbon atoms, or
a radical -R3'[-Z2-R2-[Z1-R1]_{m'}]_{k'},
in which
R3' is a (k'+1)-valent organic radical, which is otherwise defined like radical R3,
R1, R2, Z1, and Z2 are defined as in formula (I),
m' is defined like m, with the proviso that
k = 1 to 4, k' = 1 to 4, and k + k' = 2 to 5;
wherein, in the case (b), the species thus obtained are reacted in turn
(c) with one or more species of the general formula (VIa)
Y-(O=C)-R6-E' (VIa)
in which E' is E or COOR^{d} and, if E' is (C=O)-Y', Y and Y' are defined as in formula (VI),
or
(d) with one or more species of the general formula (X)
H₂C=C(R^{f})-E' (X)
wherein R^{f} is hydrogen or an alkyl radical having 1 or 2 carbon atoms,
in a stoichiometric ratio such that the resultant building block (B2) containing amide groups contains exactly one end group E';
and wherein subsequently
one or more species resulting from (A1) and/or (A2) are reacted with one or more species resulting from (B1), (B2) and/or (B3),
and, if E' is COOR^{d}, the protective group R^{d} is eliminated, wherein E' is converted optionally by salt formation into E.

6. Use of the urea- and/or urethane-substituted amides as defined in Claims 1 to 3 and/or the rheology control agent of Claim 4 and/or of one or more rheology control agents obtainable by a method according to Claim 5 as thickeners, antisagging agents and/or antisettling agents.

7. Liquid composition comprising one or more urea- and/or urethane-substituted amides as defined in Claims 1 to 3 and/or one or more rheology control agents of Claim 4 and/or one or more rheology control agents obtainable by a method according to Claim 5.

8. Liquid composition according to Claim 7, comprising one or more polar, aprotic solvents.

9. Liquid composition according to either of Claims 7 and 8, wherein the composition is a rheology control agent composition.

10. Liquid composition according to Claim 8 or 9, wherein it comprises as solvent at least one solvent selected from the group consisting of N-alkylbutyrolactams, dialkyl sulfoxides, and carboxamides.

11. Rheology control agent composition according to Claim 9 or 10, comprising or consisting of
(i) 5 to 70 wt% of one or more urea- and/or urethane-substituted amides as defined in Claims 1 to 3 and/or of one or more rheology control agents according to Claim 4 and/or of one or more rheology control agents obtainable by a method according to Claim 5,
(ii) 30 to 95 wt% of one or more solvents, and
(iii) 0 to 4 wt% of one or more ionogenic compounds.

12. Rheology control agent composition according to any of Claims 9 to 11, comprising or consisting of
(i) 10 to 60 wt% of one or more urea- and/or urethane-substituted amides as defined in Claims 1 to 3 and/or of one or more rheology control agents according to Claim 4 and/or of one or more rheology control agents obtainable by a method according to Claim 5,
(ii) 40 to 90 wt% of one or more polar, aprotic, organic solvents, and
(iii) 0 to 3 wt% of one or more ionogenic compounds selected from the group of the halides, pseudohalides, formates, acetates, and nitrates.

13. Liquid composition according to Claim 7 or 8, selected from the group of coating materials, plastics formulations, pigment pastes, sealant formulations, cosmetics, ceramic formulations, adhesive formulations, liquid formulations for use in gas and oil extraction, liquid formulations for producing electrical components and circuits, liquid formulations for use in energy storage media, cleaning products, casting compounds, building material formulations, lubricants, troweling compounds, wax emulsions, metalworking fluids, spraying agents, crop protection formulations, printing inks, or liquid inks.

14. Liquid composition according to Claim 13, wherein the liquid composition is an aqueous composition.

15. Liquid composition according to Claim 13 or 14, **characterized in that** the liquid composition comprises 0.1 to 7 wt% of urea- and/or urethane-substituted amides as defined in Claims 1 to 3 and/or rheology control agents according to Claim 4 and/or of one or more rheology control agents obtainable by a method according to Claim 5, based on the total weight of the liquid composition.

## Revendications

1. Amide à substitution urée et/ou uréthane de la formule générale (I) 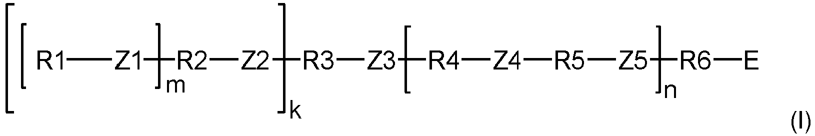 **caractérisé en ce que**
les radicaux R1 sont choisis indépendamment les uns des autres dans le groupe constitué par :
l'hydrogène, dans le cas où m = 1 et Z1 est une liaison covalente, et
les radicaux R^{a}-[O-(C=O)ᵤR^{b}]ᵥ, où
R^{a} est choisi dans le groupe constitué par les radicaux hydrocarbonés aliphatiques, saturés ou insaturés, linéaires ou ramifiés, de 1 à 40 atomes de carbone ;
les radicaux hydrocarbonés aromatiques de 6 à 40 atomes de carbone ; et
les radicaux hydrocarbonés araliphatiques de 7 à 40 atomes de carbone ;
u représente 0 ou 1,
v représente 0 à 50,
les radicaux R^{b} représentent indépendamment les uns des autres des radicaux organiques bivalents, qui
lorsque u = 0, représentent des radicaux alkylène linéaires ou ramifiés de 2 à 24 atomes de carbone, dans le cas où un radical alkylène contient deux atomes de carbone, celui-ci pouvant porter un substituant de la formule CH₂-O-(C=O)_{w}R^{c}, où w représente 0 ou 1 et R^{c} représente un radical organique de 2 à 24 atomes de carbone ; et les radicaux R^{b},
lorsque u = 1, représentent des radicaux alkylène linéaires ou ramifiés de 3 à 8 atomes de carbone ; et
dans les radicaux [O-(C=O)ᵤR^{b}], la valeur pour u dans chaque radical est indépendamment 0 ou 1, les radicaux [O-(C=O)ᵤR^{b}] pour lesquels u = 0 étant de préférenc agencés dans une ou plusieurs séquences et les radicaux [O-(C=O)ᵤR^{b}] pour lesquels u = 1 étant de préférence agencés dans une ou plusieurs séquences ;
les radicaux R2 représentent indépendamment les uns des autres des radicaux organiques bivalents, qui sont choisis dans le groupe constitué par :
les radicaux hydrocarbonés de 6 à 40 atomes de carbone, qui contiennent éventuellement un ou plusieurs groupes isocyanurate ;
les radicaux R3 représentent indépendamment les uns des autres des radicaux organiques (k+1)-valents, qui sont choisis dans le groupe constitué par :
les radicaux hydrocarbonés aliphatiques, saturés ou insaturés, linéaires ou
ramifiés, de 2 à 40 atomes de carbone, qui éventuellement contiennent un ou
plusieurs atomes d'oxygène d'éther et/ou portent un ou plusieurs groupes hydroxyle ;
les radicaux hydrocarbonés aromatiques de 6 à 40 atomes de carbone, les radicaux hydrocarbonés aromatiques portant éventuellement un ou plusieurs substituants alkyle linéaires ou ramifiés de 1 à 10 atomes de carbone ; et
les radicaux hydrocarbonés araliphatiques de 8 à 40 atomes de carbone, les radicaux hydrocarbonés aromatiques portant éventuellement un ou plusieurs substituants alkyle linéaires ou ramifiés de 1 à 10 atomes de carbone, et
un radical N-R2-Z1-R1, lorsque Z2 représente un groupe NH-(C=O), et N dans Z2 et Z3 étant relié à l'atome de carbone respectif dans NH-(C=O) et m = k = 1,
les radicaux R4 représentent indépendamment les uns des autres des radicaux organiques bivalents, qui sont choisis dans le groupe constitué par :
les radicaux hydrocarbonés aliphatiques, saturés ou insaturés, linéaires ou ramifiés, de 2 à 40 atomes de carbone, ceux-ci étant éventuellement substitués avec un ou plusieurs groupes hydroxyle ;
les radicaux R5 représentent indépendamment les uns des autres des radicaux organiques bivalents, qui sont choisis dans le groupe constitué par :
les radicaux hydrocarbonés aliphatiques, saturés ou insaturés, linéaires ou ramifiés, de 2 à 40 atomes de carbone, les radicaux hydrocarbonés contenant éventuellement des atomes d'oxygène d'éther et/ou des groupes amino tertiaires ; et
les radicaux hydrocarbonés araliphatiques de 8 à 40 atomes de carbone ;
les radicaux hydrocarbonés aromatiques de 6 à 40 atomes de carbone ;
les radicaux R6 sont choisis dans le groupe des radicaux aromatiques de 6 à 40 atomes de carbone ou sont définis tels que les radicaux R4 et sont choisis indépendamment de ceux-ci ;
les radicaux E représentent indépendamment les uns des autres COOH ou COO^{⊖}Z^{⊕}, Z^{⊕} étant choisi dans le groupe constitué par les cations de métaux alcalins, NH₄ ^{⊕}, les cations hétérocycliques, les ions ammonium substitués organiquement 1 à 4 fois, dont les substituants organiques sont de préférence choisis dans le groupe constitué par les radicaux alkyle de 1 à 24 atomes de carbone, les radicaux aryle de 6 à 24 atomes de carbone, les radicaux alkylaryle de 7 à 25 atomes de carbone, les radicaux alkyle, les radicaux aryle et les radicaux alkylaryle portant éventuellement un ou plusieurs groupes hydroxyle, et les cations de métaux alcalino-terreux, ou Z^{⊕} étant supprimé lorsque Z5 est un groupe amino protoné ou quaternisé, dans le cas des cations de métaux alcalino-terreux, Z^{⊕} représentant ½ Z^{2⊕},
les radicaux Z1 représentent indépendamment les uns des autres un groupe uréthane, un groupe urée ou une liaison covalente ;
les radicaux Z2 représentent indépendamment les uns des autres un groupe uréthane ou un groupe urée, ou, lorsque R3 représente un radical N-R2-Z1-R1,
Z2 représente un groupe NH-(C=O) ;
les radicaux Z3 représentent un groupe amide ;
les radicaux Z4 représentent un groupe amide ;
les radicaux Z5 représentent indépendamment les uns des autres un groupe amide ou un groupe amino, le groupe amino pouvant également se présenter sous forme protonée ou quaternisée et, dans ce cas, Z^{⊕} étant supprimé ;
m représente 1 à 5 ;
n représente 1 à 12 ;
k représente 1 à 5.

2. Amides à substitution urée et/ou uréthane selon la revendication 1, dans lesquels au moins un des radicaux R1, R2, R3, R4, R5, R6 et E est défini de la manière suivante :
R1 est choisi dans le groupe constitué par :
(i) les radicaux alkyle ou alcényle linéaires ou ramifiés de 6 à 24 atomes de carbone et
(ii) les radicaux polyéther de la formule R^{a}-[O-R^{b}]ᵥ, où R^{a} représente un radical alkyle ou alcényle linéaire ou ramifié de 1 à 18 atomes de carbone, R^{b} représente un ou plusieurs radicaux du groupe constitué par C₂H₄, C₃H₆ et C₄H₈, et v représente un nombre entier de 1 à 25 ;
R2 est choisi dans le groupe constitué par : 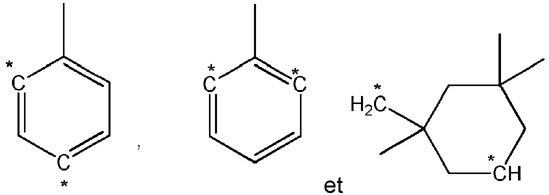 avec m = 1, Z1 = -O-(C=O)-NH- et Z2 = -NH-(C=O)-O-, et les symboles «*» caractérisant les emplacements de liaison du radical R2 respectif aux radicaux Z1 et Z2 ;
R3 est choisi dans le groupe constitué par :
(i) les radicaux alkylène de 2 à 6 atomes de carbone, k représentant le nombre 1, et
(ii) les radicaux alkylène de 4 à 6 atomes de carbone, qui sont de préférence substitués avec des groupes hydroxyle, k représentant le nombre 1, 2 ou 3 ;
R4 est choisi dans le groupe constitué par les radicaux alkylène ou alcénylène linéaires ou ramifiés de 4 à 40 atomes de carbone ;
R5 est choisi dans le groupe constitué par les radicaux alkylène linéaires ou ramifiés de 2 à 13 atomes de carbone, les radicaux cycloalkylène de 3 à 13 atomes de carbone et les radicaux arylalkylène de 7 à 13 atomes de carbone ; R6 est choisi dans le groupe constitué par les radicaux alkylène ou alcénylène linéaires ou ramifiés de 4 à 40 atomes de carbone ; et
E est un groupe COOH.

3. Amides à substitution urée et/ou uréthane selon la revendication 2, dans lesquels les radicaux R1, R2, R3, R4, R5, R6 et E sont tous tels que définis dans la revendication 2.

4. Agent d'ajustement de la rhéologie contenant ou constitué par un ou plusieurs amides à substitution urée et/ou uréthane tels que définis dans une ou plusieurs des revendications 1 à 3.

5. Procédé de fabrication des agents d'ajustement de la rhéologie tels que définis dans la revendication 4, **caractérisé en ce que**
(A1) une ou plusieurs espèces de la formule (III)
R1-X-H (III)
où X représente O ou N(R7), R7 représentant H, un radical alkyle de 1 à 12 atomes de carbone, un radical aryle de 6 à 12 atomes de carbone ou un radical alkylaryle de 7 à 12 atomes de carbone,
sont mises en réaction avec une ou plusieurs espèces de la formule générale (IV)
R2(NCO)m+1 (IV) ;
ou
(A2) un ou plusieurs diisocyanates contenant un groupe uretdione sont mis en réaction avec une ou plusieurs espèces de la formule générale (III)
R1-X-H (III)
dont les radicaux sont tels que définis en (A1),
avec conservation de la fonction uretdione et réaction des deux groupes isocyanate en uréthanes à fonction uretdione et/ou urées à fonction uretdione correspondants ;
(B1) une ou plusieurs espèces de la formule générale (VI)
Y-(O=C)-R4-(C=O)-Y' (VI)
où Y et Y' représentent indépendamment l'un de l'autre OR^{e} ou halogénure, ou Y et Y' sont reliés l'un avec l'autre et représentent ensemble en tant que Y-Y' un atome d'oxygène, et où R^{e} représente hydrogène ou R^{d}, R^{d} représentant un groupe protecteur pour un groupe carboxyle,
sont mises en réaction avec une ou plusieurs diamines de la formule générale (VII)
H₂N-R5-NH₂ (VII)
éventuellement en présence d'une ou de plusieurs espèces de la formule générale (VIII)
(HX)ₖ-R3-NH(R8) (VIII)
où X est tel que défini dans la formule (III) et où
R8 représente H,
un radical alkyle de 1 à 12 atomes de carbone, qui éventuellement contient un ou plusieurs atomes d'oxygène d'éther et/ou porte un ou plusieurs groupes hydroxyle,
un radical aryle de 6 à 12 atomes de carbone,
un radical alkylaryle de 7 à 12 atomes de carbone, ou
un radical -R3'[-Z2-R2-[Z1-R1]_{m'}]_{k'},
où
R3' est un radical organique (k'+1)-valent, qui est du reste défini tel que le radical R3,
R1, R2, Z1 et Z2 sont tels que définis dans la formule (I),
m' est défini tel que m, à condition que
k = 1 à 4, k' = 1 à4 etk + k' = 2 à 5 ;
et dans le cas de la formation d'un radical terminal -R5-NH₂, ce radical est mis en réaction
(a) avec une ou plusieurs espèces de la formule générale (VIa)
Y-(O=C)-R6-E' (VIa)
où E' représente E ou COOR^{d} et, si E' = (C=O)-Y', Y et Y' sont tels que définis dans la formule (VI),
ou
(b) avec une ou plusieurs espèces de la formule générale (X)
H₂C=C(R^{f})-E' (X)
où R^{f} représente hydrogène ou un radical alkyle de 1 ou 2 atomes de carbone,
en un rapport stœchiométrique tel que le constituant contenant des groupes amide résultant (B1) contienne exactement un groupe terminal E' ; ou
(B2) un ou plusieurs acides aminocarboxyliques de la formule générale (IXa) et/ou (IXb)
HOOC-R4-NH₂ (IXa)
et/ou
HOOC-R5-NH₂ (IXb)
sont mis en réaction dans une réaction de polycondensation en présence d'une ou de plusieurs espèces de la formule générale (VIII)
(HX)ₖ-R3-NH(R8) (VIII),
où X est tel que défini dans la formule (III) et où
R8 représente H,
un radical alkyle de 1 à 12 atomes de carbone, qui éventuellement contient un ou plusieurs atomes d'oxygène d'éther et/ou porte un ou plusieurs groupes hydroxyle,
un radical aryle de 6 à 12 atomes de carbone,
un radical alkylaryle de 7 à 12 atomes de carbone, ou
un radical -R3'[-Z2-R2-[Z1-R1]_{m'}]_{k'},
où
R3' est un radical organique (k'+1)-valent, qui est du reste défini tel que le radical R3,
R1, R2, Z1 et Z2 sont tels que définis dans la formule (I),
m' est défini tel que m, à condition que
k = 1 à 4, k' = 1 à4 etk + k' = 2 à 5 ;
et les espèces ainsi obtenues sont à leur tour mises en réaction
(a) avec une ou plusieurs espèces de la formule générale (VIa)
Y-(O=C)-R6-E' (VIa)
où E' représente E ou COOR^{d} et, si E' = (C=O)-Y', Y et Y' sont tels que définis dans la formule (VI), ou
(b) avec une ou plusieurs espèces de la formule générale (X)
H₂C=C(R^{f})-E' (X)
où R^{f} représente hydrogène ou un radical alkyle de 1 ou 2 atomes de carbone,
en un rapport stœchiométrique tel que le constituant contenant des groupes amide résultant (B2) contienne exactement un groupe terminal E' ;
ou
(B3) un ou plusieurs lactames de la formule générale (XIa) et/ou (Xlb) 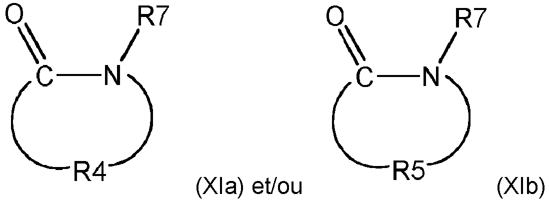 où au moins un radical R7 représente l'hydrogène, sont mis en réaction par polymérisation par ouverture de cycle
(a) en présence d'une ou de plusieurs espèces de la formule générale (XII)
(HO)ₖ-R3-COOH (XII)
ou
(b) en présence d'une ou de plusieurs espèces de la formule générale
(HX)ₖ-R3-NH(R8) (VIII),
où
R8 représente H,
un radical alkyle de 1 à 12 atomes de carbone, qui éventuellement contient un ou plusieurs atomes d'oxygène d'éther et/ou porte un ou plusieurs groupes hydroxyle,
un radical aryle de 6 à 12 atomes de carbone,
un radical alkylaryle de 7 à 12 atomes de carbone, ou
un radical -R3'[-Z2-R2-[Z1-R1]_{m'}]_{k'},
où
R3' est un radical organique (k'+1)-valent, qui est du reste défini tel que le radical R3,
R1, R2, Z1 et Z2 sont tels que définis dans la formule (I),
m' est défini tel que m, à condition que
k = 1 à 4, k' = 1 à 4 et k + k' = 2 à 5,
dans le cas (b), les espèces ainsi obtenues étant à leur tour mises en réaction
(c) avec une ou plusieurs espèces de la formule générale (VIa)
Y-(O=C)-R6-E' (VIa)
où E' représente E ou COOR^{d} et, si E' = (C=O)-Y', Y et Y' sont tels que définis dans la formule (VI),
ou
(d) avec une ou plusieurs espèces de la formule générale (X)
H₂C=C(R^{f})-E' (X)
où R^{f} représente l'hydrogène ou un radical alkyle de 1 ou 2 atomes de carbone, en un rapport stœchiométrique tel que le constituant contenant des groupes amide résultant (B2) contienne exactement un groupe terminal E' ;
puis
une ou plusieurs espèces résultant de (A1) et/ou (A2) étant mises en réaction avec une ou plusieurs espèces résultant de (B1), (B2) et/ou (B3), et, si E' représente COOR^{d}, le groupe protecteur R^{d} étant clivé, E' étant éventuellement transformé en E par salinisation.

6. Utilisation des amides à substitution urée et/ou uréthane tels que définis dans les revendications 1 à 3 et/ou des agents d'ajustement de la rhéologie de la revendication 4 et/ou d'un ou de plusieurs agents d'ajustement de la rhéologie pouvant être obtenus par un procédé selon la revendication 5 en tant qu'agents épaississants, agents anti-écoulement et/ou agents stabilisateurs.

7. Composition liquide contenant un ou plusieurs amides à substitution urée et/ou uréthane tels que définis dans les revendications 1 à 3 et/ou un ou plusieurs agents d'ajustement de la rhéologie de la revendication 4 et/ou un ou plusieurs agents d'ajustement de la rhéologie pouvant être obtenus par un procédé selon la revendication 5.

8. Composition liquide selon la revendication 7, contenant un ou plusieurs solvants aprotiques polaires.

9. Composition liquide selon l'une quelconque des revendications 7 ou 8, qui consiste en une composition d'agent d'ajustement de la rhéologie.

10. Composition liquide selon la revendication 8 ou 9, celle-ci contenant en tant que solvant au moins un solvant choisi dans le groupe constitué par les N-alkylbutyrolactames, les dialkylsulfoxydes et les amides d'acides carboxyliques.

11. Composition d'agent d'ajustement de la rhéologie selon la revendication 9 ou 10, contenant ou constituée par :
(i) 5 à 70 % en poids d'un ou de plusieurs amides à substitution urée et/ou uréthane tels que définis dans les revendications 1 à 3 et/ou d'un ou de plusieurs agents d'ajustement de la rhéologie selon la revendication 4 et/ou d'un ou de plusieurs agents d'ajustement de la rhéologie pouvant être obtenus par un procédé selon la revendication 5,
(ii) 30 à 95 % en poids d'un ou de plusieurs solvants, et
(iii) 0 à 4 % en poids d'un ou de plusieurs composés ionogènes.

12. Composition d'agent d'ajustement de la rhéologie selon l'une quelconque des revendications 9 à 11, contenant ou constituée par :
(i) 10 à 60 % en poids d'un ou de plusieurs amides à substitution urée et/ou uréthane tels que définis dans les revendications 1 à 3 et/ou d'un ou de plusieurs agents d'ajustement de la rhéologie selon la revendication 4 et/ou d'un ou de plusieurs agents d'ajustement de la rhéologie pouvant être obtenus par un procédé selon la revendication 5,
(ii) 40 à 90 % en poids d'un ou de plusieurs solvants organique, aprotiques, polaires, et
(iii) 0 à 3 % en poids d'un ou de plusieurs composés ionogènes, choisis dans le groupe constitué par les halogénures, les pseudohalogénures, les formiates, les acétates et les nitrates.

13. Composition liquide selon la revendication 7 ou 8, choisie dans le groupe constitué par les agents de revêtement, les formulations de matières plastiques, les pâtes de pigments, les formulations d'agents d'étanchéité, les cosmétiques, les formulations de céramiques, les formulations d'adhésifs, les formulations liquides destinées à être utilisées dans l'extraction de gaz et de pétrole, les formulations liquides destinées à la fabrication de composants électriques et de circuits électriques, les formulations liquides destinées à être utilisées dans des milieux de stockage d'énergie, les agents de nettoyage, les masses de scellement, les formulations de matériaux de construction, les lubrifiants, les enduits, les émulsions de cires, les liquides pour l'usinage de métaux (Metal Working Fluids), les agents de pulvérisation, les formulations d'agents pour la protection des plantes, les encres d'impression ou les encres.

14. Composition liquide selon la revendication 13, la composition liquide étant une composition aqueuse.

15. Composition liquide selon la revendication 13 ou 14, **caractérisée en ce que** la composition liquide contient 0,1 à 7 % en poids d'amides à substitution urée et/ou uréthane tels que définis dans les revendications 1 à 3 et/ou d'agents d'ajustement de la rhéologie selon la revendication 4 et/ou d'un ou de plusieurs agents d'ajustement de la rhéologie pouvant être obtenus par un procédé selon la revendication 5, par rapport au poids total de la composition liquide.
